# EUROPÄISCHE PATENTSCHRIFT

(11) **EP 1 651 383 B1**
(45) Veröffentlichungstag und Bekanntmachung des Hinweises auf die Patenterteilung: **04.04.2007**
(21) Anmeldenummer: 04741233.3
(22) Anmeldetag: 23.07.2004
(51) Int. Cl.: B23Q 3/157

(54) **WERKZEUGWECHSELVORRICHTUNG FUER EINE WERKZEUGMASCHINE UND VERFAHREN ZUM WERKZEUGWECHSEL AN EINER WERKZEUGMASCHINE**
TOOL CHANGING DEVICE FOR A MACHINE TOOL AND METHOD FOR CHANGING TOOLS ON A MACHINE TOOL
DISPOSITIF DE CHANGEMENT D'OUTIL POUR UNE MACHINE-OUTIL ET PROCEDE POUR LE CHANGEMENT D'OUTIL SUR UNE MACHINE-OUTIL

(30) Priorität: 05.08.2003 DE 10337547
(43) Veröffentlichungstag der Anmeldung: 03.05.2006
(73) Patentinhaber: Ex-Cell-O GmbH, 73054 Eislingen (DE)
(72) Erfinder: HAGMANN, Michael, 73035 Göppingen (DE); WINCKLER, Friedrich, 73527 Schwäbisch Gmünd (DE)
(74) Vertreter: Hoeger, Stellrecht & Partner Patentanwälte
(86) Internationale Anmeldenummer: PCT/EP2004/008237
(87) Internationale Veröffentlichungsnummer: WO 2005/016592

(56) Entgegenhaltungen:
- DE-A- 2 211 123
- DE-A- 19 851 264
- PATENT ABSTRACTS OF JAPAN Bd. 0031, Nr. 22 (M-076), 13. Oktober 1979 (1979-10-13) & JP 54 099280 A (HITACHI SEIKI CO LTD), 4. August 1979 (1979-08-04)

## Beschreibung

Die Erfindung betrifft eine Werkzeugwechselvorrichtung für eine Werkzeugmaschine mit mindestens einem Werkzeugträger, umfassend mindestens eine Durchschleusstation, in welche ein Werkzeug in einer Einschleusrichtung einführbar ist und in einer Ausschleusrichtung ausführbar ist, wobei das Werkzeug an der Durchschleusstation von dem zugeordneten Werkzeugträger lösbar ist und/oder an dem vorgesehenen Werkzeugträger fixierbar ist und in einem Zwischenplatz gehalten ist, und eine Halteeinrichtung zum Halten des Werkzeugs an einem Zwischenplatz.

Ferner betrifft die Erfindung ein Verfahren zum Werkzeugwechsel an einer Werkzeugmaschine mit mindestens einem Werkzeugträger, bei dem gelöste Werkzeuge in einer Werkzeuglagereinrichtung abgelegt werden und zu fixierende Werkzeuge von der Werkzeuglagereinrichtung her geliefert werden, und ein Werkzeug in eine Durchschleusstation, an welcher das Werkzeug von dem zugeordneten Werkzeugträger gelöst wird oder das Werkzeug an dem vorgesehenen Werkzeugträger fixiert wird, in einer Einschleusrichtung eingeführt wird und in einer Ausschleusrichtung ausgeführt wird.

In der DE 198 51 264 A1 ist eine Werkzeugwechselvorrichtung insbesondere für Ein- oder Mehrspindelwerkzeugmaschinen beschrieben, welche einen Hauptspeicher zur Aufnahme einer Vielzahl von Bearbeitungswerkzeugen, zumindest einen Zwischenspeicher und zumindest eine Übergabevorrichtung zum Transport der Bearbeitungswerkzeuge zwischen dem Hauptspeicher und dem Zwischenspeicher aufweist. Der Zwischenspeicher hat zumindest eine Übergabeposition zur Werkzeugübergabe zwischen dem Zwischenspeicher und der jeweiligen Spindel der Werkzeugmaschine.

Bei einer Werkzeugmaschine und insbesondere einem Bearbeitungszentrum, wie es beispielsweise in der EP 0 614 724 B1 beschrieben ist, kann eine Mehrzahl von verschiedenen Werkzeugen zum Einsatz kommen, um unterschiedliche Bearbeitungsvorgänge an einem oder mehreren Werkstücken durchführen zu können. Unabhängig davon müssen Werkzeuge auch aufgrund von Verschleiß ausgetauscht werden.

Ein Werkzeugtausch an einem Werkzeugträger sollte mit minimierter Stillstandszeit der Werkzeugmaschine durchführbar sein.

Der Erfindung liegt die Aufgabe zugrunde, eine Werkzeugwechselvorrichtung zu schaffen, welche auf einfache Weise ausgebildet ist und mit der auf einfache Weise ein Werkzeugaustausch durchführbar ist.

Diese Aufgabe wird bei der eingangs genannten Werkzeugwechselvorrichtung erfindungsgemäß dadurch gelöst, dass die Halteeinrichtung gegenüberliegende korrespondierende drehbare Greifelemente umfasst, mittels derer ein Werkzeug formschlüssig haltbar ist, und dass über eine Drehbewegung der Greifelemente ein Werkzeug durch die Durchschleusstation durchschleusbar ist, wobei je nach Drehstellung ein Werkzeug einschleusbar, formschlüssig haltbar oder ausschleusbar ist.

Durch die erfindungsgemäße Lösung lässt sich ein einfacher Werkzeugaustausch durchführen: Die Durchschleusstation lässt sich beispielsweise fest oder linearverschieblich gegenüber einem Maschinengestell anordnen. Es ist nicht mehr notwendig, dass beispielsweise ein Greifer ein Werkzeug von dem Werkzeugträger holen muss bzw. diesem bringen muss. Der Werkzeugträger, der in der Regel selber beweglich ausgebildet ist, kann an die Durchschleusstation fahren, um ein Werkzeug abzuliefern bzw. ein Werkzeug abzuholen. Die Durchschleusstation lässt sich damit in definierter Position oder mit kleinem Bewegungsraum bezüglich der Werkzeugmaschine anordnen und insbesondere so anordnen, dass sie kollisionsfrei bezüglich des oder der Werkzeugträger ist. Bei einer solchen Durchschleusstation lässt sich dann ferner auf einfache Weise eine Ablage von Werkzeugen in einer Werkzeuglagereinrichtung bzw. ein Abholen von der Werkzeuglagereinrichtung erreichen, da eine entsprechende Transporteinrichtung außerhalb eines Bewegungsraums des oder der Werkzeugträger angeordnet werden kann.

Durch eine definierte Einschleusrichtung und definierte Ausschteusrichtung lässt sich ein Werkzeug auf einfache Art und Weise von einem Werkzeugträger abholen und einer Werkzeuglagereinrichtung zuführen bzw. ein Werkzeug von der Werkzeuglagereinrichtung abholen und dem Werkzeugträger zuführen.

Durch das Vorsehen mehrerer Durchschleusstationen ist es beispielsweise auch möglich, Holstationen zur Zuführung von Werkzeugen zu dem oder den Werkzeugträgern und Bringstationen zum Abgeben von Werkzeugen von den entsprechenden Werkzeugträgern vorzusehen. Dadurch lassen sich Stillstandszeiten der Werkzeugmaschine während des Werkzeugwechsels minimieren, da sich ein neues Werkzeug bereithalten lässt, wenn ein altes Werkzeug von einem Werkzeugträger gelöst wird.

Ein Werkzeug ist an der mindestens einen Durchschleusstation in einem Zwischenplatz gehalten. Dieser Zwischenplatz, der insbesondere räumlich definiert ist und fest oder beweglich sein kann, dient dazu, ein Werkzeug von einem Werkzeugträger zu lösen bzw. an einem Werkzeugträger zu fixieren.

Es ist eine Halteeinrichtung zum Halten des Werkzeugs an einem Zwischenplatz vorgesehen.

Ein Werkzeugwechsel lässt sich auf konstruktiv einfache Weise durchführen, wenn die Halteeinrichtung gegenüberliegende korrespondierende Greifelemente umfasst, mittels derer ein Werkzeug formschlüssig haltbar ist. Diese Greifelemente halten dann das Werkzeug, um dieses von dem zugeordneten Werkzeugträger lösen zu können bzw. um es an dem vorgesehenen Werkzeugträger fixieren zu können. Wenn ein Werkzeug formschlüssig zwischen den korrespondierenden Greifelementen gehalten ist, dann lässt sich der Werkzeugträger wegführen. Die Greifelemente sind dabei insbesondere so beweglich ausgebildet, dass ein Einführen in einen Zwischenplatz ermöglicht ist und ebenfalls ein Ausführen ermöglicht ist.

Die Greifelemente sind dazu drehbar angeordnet. Durch eine entsprechende Drehbewegung bzw. Schwenkbewegung der Greifelemente lässt es sich erreichen, dass ein Werkzeug durch die entsprechende Durchschleusstation durchschleusbar ist. Bei bestimmten Drehstellungen ist ein Einschleusen bzw. Ausschleusen möglich und bei anderen bestimmten Drehstellungen ist ein formschlüssiges Halten möglich.

Vorzugsweise ist dabei dem mindestens einen Werkzeugträger mindestens eine Durchschleusstation zugeordnet. Dadurch lässt sich dann auf einfache Weise eine Werkzeugholung durch den Werkzeugträger und eine Werkzeugbringung durch den Werkzeugträger steuern, da dieser nur die zugeordnete Durchschleusstation oder zugeordneten Durchschleusstationen anfahren muss.

Insbesondere ist jedem Werkzeugträger mindestens eine Durchschleusstation zugeordnet. Es lassen sich dann bei einer Werkzeugmaschine mit mehreren Werkzeugträgern, beispielsweise einer Mehrspindel-Werkzeugmaschine, definiert für jeden Werkzeugträger Werkzeugwechsel durchführen.

Günstig ist es, wenn die Einschleusrichtung beim Einführen eines Werkzeugs in die mindestens eine Durchschleusstation zum Lösen des Werkzeugs von dem zugeordneten Werkzeugträger und die Ausschleusrichtung beim Ausführen eines an einem Werkzeugträger fixierten Werkzeugs aus der Durchschleusstation oder einer weiteren Durchschleusstation im wesentlichen entgegengerichtet sind. Es liegen dann definierte Richtungen an der Werkzeugmaschine vor, wobei sich die entsprechende Einschleusung bzw. Ausschleusung des Werkzeugs durch Linearbewegungen realisieren läßt.

Aus dem gleichen Grund ist es vorteilhaft, wenn die Ausschleusrichtung beim Ausführen eines von einem Werkzeugträger gelösten Werkzeugs aus der mindestens einen Durchschleusstation und die Einschleusrichtung beim Einführen eines Werkzeugs zum Fixieren an dem vorgesehen Werkzeugträger in die Durchschleusstation oder einer weiteren Durchschleusstation im wesentlichen entgegengerichtet sind.

Ganz besonders vorteilhaft ist es, wenn dem mindestens einen Werkzeugträger eine erste Durchschleusstation zum Lösen eines Werkzeugs vom Werkzeugträger und eine zweite Durchschleüsstation zum Fixieren eines Werkzeugs an dem Werkzeugträger zugeordnet ist. Dadurch lassen sich Stillstandszeiten während eines Werkzeugwechsels minimieren, da in der zweiten Durchschleusstation ein neues Werkzeug bereitgehalten werden kann, wenn das alte Werkzeug an der ersten Durchschleusstation von dem entsprechenden Werkzeugträger gelöst wird. Die erste Durchschleusstation und die zweite Durchschleusstation sind dabei vorzugsweise benachbart angeordnet, so daß die Verfahrbewegung des Werkzeugträgers minimiert ist, nachdem der Werkzeugträger sein altes Werkzeug abgegeben hat und an der zweiten Durchschleusstation ein neues Werkzeug aufnehmen soll.

Günstig ist es, wenn die Einschleusrichtüng und die Ausschleusrichtung an der mindestens einen Durchschleusstation eine Durchschleusrichtung bilden. Einschleusrichtung und Ausschleusrichtung können dabei zusammenfallen oder parallel beabstandet zueinander sein, wenn sich die Position der Durchschleusstation in einer Einschleusstellung und einer Ausschleusstellung unterscheidet. Ein Werkzeug läßt sich dann durch die entsprechende Durchschleusstation gewissermaßen durchschieben, um es so entweder nach einer Lösung vom Werkzeugträger abzulegen oder nach Zuführung von einer Werkzeuglagereinrichtung an einem Werkzeugträger zu fixieren und mit dem Werkzeugträger wegzuführen.

Grundsätzlich ist es möglich, daß die EinschleUsrichtung und die Ausschleusrichtung quer zueinander liegen und beispielsweise in einem Winkel von 90° zueinander liegen. Bilden sie eine einzige Durchschleusrichtung, d. h. liegen sie parallel bzw. fallen sie zusammen, dann läßt sich auch ein Halten des Werkzeugs für das Lösen vom Werkzeugträger bzw. Fixieren am Werkzeugträger auf konstruktiv einfache Weise erreichen. Es ist dann auch günstig, wenn die Durchschleusrichtung eine vertikale Richtung ist; die Vorrichtung läßt sich dabei insbesondere im Zusammenhang mit einer Werkzeuglagereinrichtung und einer Transporteinrichtung zum Transport von Werkzeugen zwischen der Werkzeuglagereinrichtung und der mindestens einen Durchschleusstation auf platzsparende Weise ausbilden.

Eine platzsparende Ausbildung läßt sich ebenfalls erreichen, wenn die Durchschleusrichtung zum Lösen eines Werkzeugs und Weitergabe an eine Werkzeuglagereinrichtung und die Durchschleusrichtung zum Einführen eines Werkzeugs von der Werkzeuglagereinrichtung her und Fixieren des Werkzeugs an dem vorgesehen Werkzeugträger im wesentlichen entgegengerichtet sind. Dadurch läßt sich gewährleisten, daß ein Werkzeugträger für einen Werkzeugwechsel im Bereich der Durchschleusstationen im wesentlichen nur eine Linearbewegung in der Durchschleusrichtüng durchführen muß. Dies gilt auch für eine Transporteinrichtung, welche Werkzeuge von der Werkzeuglagereinrichtung her liefert bzw. von der entsprechenden Durchschleusstation abholt, um sie der Werkzeüglagereinrichtung zuzuführen.

Günstigerweise ist die mindestens eine Durchschleusstation in einem Bewegungsraum oder vorzugsweise am Rande eines Bewegungsraums des mindestens einen Werkzeugträgers angeordnet. Dadurch wird es ermöglicht, daß der Werkzeugträger der Durchschleusstation ein Werkzeug liefern kann bzw. von dieser abholen kann. Die Durchschleusstation muß dann selber als Ganzes nicht mehr beweglich sein, damit sie ein Werkzeug abholen kann. (Sie kann aber beweglich zum Entnehmen eines Werkzeugs vom Werkzeugträger bzw. zum Einsetzen eines Werkzeugs am Werkzeugträger sein.) Dadurch wiederum läßt sich eine Transporteinrichtung zum Transport von Werkzeugen zwischen der Werkzeuglagereinrichtung und der oder den Durchschleusstationen getrennt ausbilden und insbesondere außerhalb des Bewegungsraums anordnen. Dadurch wird Kollisionsfreiheit gewährleistet. Darüber hinaus läßt sich die Werkzeugbereitstellung und die Werkzeuglösung bzw. Werkzeugfixierung bezüglich Werkzeugträgern zumindest teilweise entkoppeln, was wiederum Maschinenstillstandszeiten während Werkzeugwechsels verringern läßt.

Bei einer Variante einer Ausführungsform ist die mindestens eine Durchschleusstation fest gegenüber einem Maschinengestell der Werkzeugmaschine angeordnet. Es läßt sich dadurch eine Trennung durchführen zwischen einem Bewegungsraum des oder der Werkzeugträger und einem Transportraum, in welchem sich eine Transporteinrichtung bewegt, welche Werkzeuge zwischen der oder den Durchschleusstationen und einer Werkzeuglagereinrichtung transportiert. Der mindestens eine Werkzeugträger ist dabei vorzugsweise quer zur Einschleusrichtung und Ausschleusrichtung beweglich, so daß ein Werkzeug vom Werkzeugträger durch dessen Bewegung entnehmbar ist bzw. durch dessen Bewegung an ihm einsetzbar ist.

Bei einer alternativen Ausführungsform ist die mindestens eine Durchschleusstation beweglich gegenüber einem Maschinengestell der Werkzeugmaschine angeordnet. Diese Ausführungsform ist besonders vorteilhaft, wenn der mindestens eine Werkzeugträger keine Beweglichkeit in einer Entnahmerichtung bzw. Einsetzrichtung des Werkzeugs am Werkzeugträger aufweist. Durch eine Bewegung der Durchschleusstation kann dann je nach Bewegungsrichtung ein Werkzeug von dem Werkzeugträger entnommen werden oder ein Werkzeug an dem zugeordneten Werkzeugträger eingesetzt werden.

Vorzugsweise ist dann die mindestens eine Durchschleusstation quer zur Einschleusrichtung und Ausschleusrichtung verschieblich und insbesondere senkrecht zu diesen Richtungen verschieblich. Durch eine Bewegung der Durchschleusstation kann dann ein Werkzeug von dem Werkzeugträger entnommen werden bzw. ein Werkzeug in den zugeordneten Werkzeugträger eingesetzt werden. Die erfindungsgemäße Werkzeugwechselvorrichtung kann dann auch beispielsweise an einer Werkzeugmaschine eingesetzt werden, bei welcher für die Werkzeugspindel oder Werkzeugspindeln keine Beweglichkeit in Z-Richtung vorgesehen ist, das heißt bei welcher die Werkzeugspindel bzw. Werkzeugspindein nicht als Pinolen ausgebildet sind.

Es kann vorgesehen sein, daß die mindestens eine Durchschleusstation an einem beweglichen Schlitten angeordnet ist; wobei der Bewegungsraum dieses Schlittens vorzugsweise außerhalb des Bewegungsraums des mindestens einen Werkzeugträgers liegt. Durch eine Bewegung des Schlittens läßt sich die relative Position zwischen der mindestens einen Durchschleusstation und dem mindestens einen Werkzeugträger ändern. Auf diese Weise läßt sich eine Fixierungseinrichtung und Löseeinrichtung für Werkzeuge in dem Werkzeugträger bilden. Der Bewegungsraum des Schlittens läßt sich dabei begrenzen, da nur die Funktionsweise der Werkzeugentnahme bzw. des Werkzeugeinsetzens gewährleistet sein muß.

Vorzugsweise ist der Schlitten angetrieben und dabei synchronisiert mit einem Werkzeugwechselvorgang angetrieben, um so eben einen Werkzeugwechsel durchführen zu können.

Insbesondere ist die mindestens eine Durchschleusstation zwischen einer Einschleusstellung und einer Ausschleusstellung beweglich, um so Werkzeuge von dem zugeordneten Werkzeugträger abholen zu können bzw. diesem liefern zu können.

Insbesondere ist bei der Bewegung zwischen der Einschleusstellung und der Ausschleusstellung ein Werkzeug durch die zugeordnete Durchschleusstation gehalten. Ein Zwischenplatz, an welchem ein Werkzeug gehalten ist, ist dadurch beweglich ausgestaltet.

Insbesondere steht die mindestens eine Durchschleusstation mit einer Werkzeuglagereinrichtung in Verbindung, so daß Werkzeuge von der Werkzeuglagereinrichtung der Durchschleusstation zuführbar sind und von der Durchschleusstation Werkzeuge der Werkzeuglagereinrichtung zuführbar sind.

Durch die mindestens eine Durchschleusstation wird eine Anlieferungsstelle bzw. Ablieferungsstelle für Werkzeuge bezüglich eines Werkzeugträgers bereitgestellt. Um diese Anlieferungsstelle bzw. Ablieferungsstelle mit einer Werkzeuglagereinrichtung zu verbinden, bewegt sich günstigerweise eine Transporteinrichtung zum Transport von Werkzeugen zwischen der mindestens einen Durchschleusstation und der Werkzeuglagereinrichtung außerhalb eines Bewegungsraums des mindestens einen Werkzeugträgers. Dieser Transportraum für Werkzeuge, welcher dem Bewegungsraum der Transporteinrichtung entspricht, ist dann entkoppelt von dem eigentlichen Arbeitsraum der Werkzeugmaschine, in welchem die Werkzeugträger beweglich sind. Die Transporteinrichtung läßt sich dann auch auf einfache Weise ausbilden, da sie die Werkzeuge an definierten Stellen, nämlich der oder den Durchschleusstationen oder der Werkzeuglagereinrichtung, abholen kann bzw. an solchen definierten und räumlich festgelegten Stellen abliefern kann. Die Freiheitsgrade bezüglich der Beweglichkeit der Transporteinrichtung lassen sich dadurch verringern, so daß diese sich wiederum konstruktiv einfacher ausgestalten läßt.

Beispielsweise umfaßt die Transporteinrichtung einen Kreuzschlitten, welcher durch entsprechende Führungen in quer zueinander liegenden Richtungen beweglich ist.

Vorteilhafterweise ist für die mindestens eine Durchschleusstation eine Löseeinrichtung zum Lösen eines Werkzeugs von einem Werkzeugträger vorgesehen. Aus dem gleichen Grund ist es günstig, wenn für die mindestens eine Durchschleusstation eine Fixierungseinrichtung zum Fixieren eines Werkzeugs an einem Werkzeugträger vorgesehen ist. Ein Werkzeugwechsel lässt sich dabei beim Durchschleusen durch die entsprechende Durchschleusstation auf einfache Weise durchführen. Die Löseeinrichtung und die Fixierungseinrichtung können mittels einer Bewegungseinrichtung für die mindestens eine Durchschleusstation gebildet sein.

Ein solches Halten lässt sich auf konstruktiv einfache Weise erreichen, wenn das Werkzeug an dem Zwischenplatz formschlüssig gehalten ist. Entsprechende Greifelemente fassen dann das Werkzeug so, dass es nicht aus diesem Zwischenplatz herausfällt.

Günstig ist es, wenn bei einer Bewegung des Werkzeugs in einen Zwischenplatz eine Bewegung des Werkzeugs in Gegenrichtung sperrbar ist. Dadurch wird, insbesondere solange das Werkzeug noch nicht formschlüssig in dem Zwischenplatz gehalten ist, ein Herausfallen verhindert. Diese Sperrung kann beispielsweise dadurch verursacht sein, dass das Werkzeug noch an dem Werkzeugträger gehalten ist, wenn es in den Zwischenplatz geschoben wird bzw. an einer Transporteinrichtung wie einem Kreuzschlitten gehalten ist, wenn es in den Zwischenplatz geschoben wird.

Ganz besonders vorteilhaft ist es, wenn als Zwischenplätze mindestens ein getrennter Bringplatz und Holplatz für das Werkzeug vorgesehen sind. Über einen Bringplatz lässt sich ein Werkzeug halten, welches von einem Werkzeugträger zum Austausch geliefert wurde. Über einen Holplatz lässt sich ein Werkzeug halten, welches von der Werkzeuglagereinrichtung her zum Werkzeugwechsel an einen Werkzeugträger geliefert wurde. Über das Vorsehen von getrennten Bringplätzen und Holplätzen lassen sich Maschinenstillstandszeiten für den Werkzeugwechsel minimieren.

Es ist dann günstig, wenn eine Sperreinrichtung zum Sperren der Drehbewegung vorgesehen ist. Bei gesperrter Drehbewegung lässt es sich erreichen, dass eine Position der Greifelemente, bei welcher diese ein Werkzeug formschlüssig halten, gesichert ist.

Beispielsweise umfasst die Sperreinrichtung eine federbeaufschlagte Sperrklinke, welche in eine Sperraufnahme eines Greifelements eintauchbar ist. Dadurch lässt sich auf konstruktiv einfache Weise die Drehbewegung eines Greifelements sperren. Beispielsweise ist die Sperrklinke so an das zugeordnete Greifelement angepasst, dass eine Drehbewegung nur in einer Drehrichtung zugelassen ist. Dadurch lässt sich eine Durchschleusstation realisieren, bei der ein Werkzeug nur in einer Durchschleusrichtung durchschleusbar ist. Beispielsweise ist eine Sperrstellung so eingestellt, dass ein bestimmter Kraftaufwand notwendig ist, um diese zu lösen. Dieser Kraftaufwand kann beispielsweise über einen Werkzeugträger (Werkzeugspindel) beim Einfahren aufgebracht werden.

Insbesondere sind die Greifelemente so ausgebildet, dass eine Drehbewegung über eine Bewegung des Werkzeugs initiierbar ist. Die Bewegung des Werkzeugs wiederum erfolgt über einen Werkzeugträger oder über eine Transporteinrichtung für Werkzeuge. Dadurch läßt sich ein automatisches Fassen von Werkzeugen durch die Greifelemente erreichen.

Ganz besonders vorteilhaft ist es, wenn die Formgebung der Greifelemente an ein zu haltendes Werkzeug angepaßt ist, um so ein formschlüssiges Halten zu ermöglichen.

Bei einer Ausführungsform sind die Greifelemente in einem Winkelbereich, welcher ein Teilwinkel von 360° ist, drehbar. Insbesondere sind die Greifelemente dann gabelförmig ausgebildet und schwenkbar angeordnet. Der Platzbedarf solcher Gabelelemente ist relativ gering.

Bei einer weiteren Ausführungsform sind die Greifelemente in einem Vollwinkelbereich drehbar und insbesondere rotierbar. Ein Durchschleusen einschließlich eines formschlüssigen Haltens in einem Zwischenplatz läßt sich dann über eine entsprechende umlaufende Drehbewegung der Greifelemente erhalten. Eine entsprechende Drehbewegung bei solchen Greifelementen ist auf konstruktiv einfache Weise über eine Werkzeugbewegung initiierbar.

Die Drehachse der Greifelemente liegt dabei vorzugsweise quer und insbesondere senkrecht zur Durchschleusrichtung, um so ein Durchschleusen mit einem formschlüssigen Halten in einem Zwischenplatz zu ermöglichen.

Die Greifelemente können als Greifgabeln ausgebildet sein.

Es ist auch möglich, daß die Greifelemente jeweils eine Mehrzahl von Aufnahmen für ein Werkzeug aufweisen. Durch Drehung der Greifelemente läßt sich so ein formschlüssiges Halten an einem Zwischenplatz erreichen.

Insbesondere sind dabei benachbarte Aufnahmen durch einen Arm getrennt. Die Greifelemente sind dann vorzugsweise sternförmig ausgebildet.

Es ist ferner günstig, wenn die Drehrichtungen der gegenüberliegenden korrespondierenden Greifelemente entgegengesetzt sind. Auf diese Weise lässt sich der Abstand zwischen korrespondierenden Punkten der korrespondierenden Greifelemente verändern, d. h. vergrößern und verkleinern. Dies ermöglicht ein formschlüssiges Halten bei einer oder mehreren bestimmten Drehstellungen der Greifelemente und bei anderen Drehstellungen eine Freigabe dieser formschlüssigen Halteposition, um so wiederum ein Werkzeug einschleusen zu können bzw. ausschleusen zu können.

Eine Werkzeugmaschine, für welche insbesondere eine Werkzeuglagereinrichtung vorgesehen ist, lässt sich mit der erfindungsgemäßen Werkzeugwechselvorrichtung versehen.

Der Erfindung liegt ferner die Aufgabe zugrunde, das eingangs genannte Verfahren so zu verbessern, dass sich die Maschinenstillstandszeiten beim Werkzeugwechsel minimieren lassen.

Diese Aufgabe wird bei dem eingangs genannten Verfahren erfindungsgemäß dadurch gelöst, dass das Werkzeug durch gegenüberliegende korrespondierende drehbare Greifelemente formschlüssig an der Durchgangsstation in einem Zwischenplatz gehalten wird und das Werkzeug durch eine Drehbewegung der Greifelemente durch die Durchgangsstation durchschleusbar ist.

Das erfindungsgemäße Verfahren weist die bereits im Zusammenhang mit der erfindungsgemäßen Vorrichtung erläuterten Vorteil auf.

Weitere vorteilhafte Ausgestaltungen wurden ebenfalls bereits im Zusammenhang mit der erfindungsgemäßen Vorrichtung erläutert.

Insbesondere sind die Einschleusrichtung und die Ausschleusrichtung fest vorgegeben und liegen räumlich bezüglich der Werkzeugmaschine fest. Dadurch läßt sich ein definiertes Abholen von der Durchschleusstation bzw. ein definiertes Bringen von Werkzeugen zu der Durchschleusstation erreichen.

Günstigerweise bilden die Einschleusrichtung und die Ausschleusrichtung an einer Durchschleusstation eine Durchschteusrichtung.

Die nachfolgende Beschreibung bevorzugter Ausfühi-ungsförmen dient im Zusammenhang mit der Zeichnung der näheren Erläuterung der Erfindung. Es zeigen:
- Figur 1: eine schematische Vorderansicht auf ein Ausführungsbeispiel einer Werkzeugmaschine, welche mit einem Ausführungsbeispiel einer erfindungsgemäßen Werkzeugwechselvorrichtung versehen ist;
- Figur 2: eine vergrößerte Darstellung von Teilelementen der Werk-zeugwechselvorrichtung aus dem Bereich A gemäß Figur 1;
- Figur 3: eine Schnittansicht längs der Linie 3-3 gemäß Figur 1;
- Figur 4: eine vergrößerte Schnittdarstellung des Bereichs B gemäß Figur 1 mit einer Transporteinrichtung für Werkzeuge;
- Figur 5: eine Draufsicht in der Richtung C gemäß Figur 4 auf die Transporteinrichtung;
- Figur 6: eine schematische Darstellung einer Ausführungsform von Greifelementen zum Halten von Werkzeugen;
- Figur 7: eine schematische Darstellung eines Ausführungsbeispiels einer Sperreinrichtung zum Sperren der Drehbewegung von Greifelementen in einem nichtsperrenden Zwischenzustand und
- Figur 8: eine Detailansicht der Sperreinrichtung gemäß Figur 7 in einer Sperrstellung.

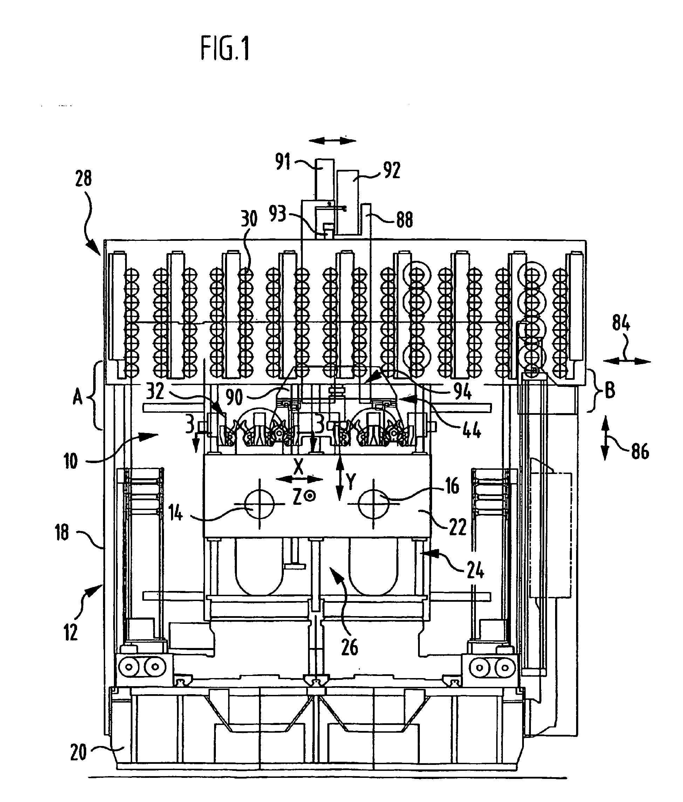

Eine erfindungsgemäße Werkzeugwechselvorrichtung, von welcher ein Ausführungsbeispiel in Figur 1 gezeigt und dort als Ganzes mit 10 bezeichnet ist, ist einer als Ganzes mit 12 bezeichneten Werkzeugmaschine zugeordnet. Die Werkzeugwechselvorrichtung 10 kann dabei integraler Bestandteil der Werkzeugmaschirie 12 sein oder nachträglich an dieser montiert sein.

Bei dem in Figur 1 gezeigten Ausführungsbeispiel ist die Werkzeugmaschine ein Zweispindler, welcher als Werkzeugträger 14 und 16 jeweils Werkzeugspindeln umfaßt.

Die erfindungsgemäße Werkzeugwechselvorrichtung läßt sich grundsätzlich an allen Arten von Werkzeugmaschinen mit verfahrbaren Werkzeugträgern einsetzen. Die Werkzeugträger 14 und 16 können in Z-Richtung (welche in Figur 1 quer zur Zeichenebene liegt) unverfahrbar sein oder als Pinolen ausgebildet sein, welche längs ihrer Längsachse (der Z-Richtung) verschieblich sind.

Die Werkzeugmaschine 12 umfaßt ein Maschinengestell 18 mit einem Maschinenbett 20. Das Maschinengestell 18 ist ortsfest aufgestellt. Die Werkzeugträger 14, 16 sind bezüglich des Maschinengestells 18 in X-Richtung und Y-Richtung beweglich geführt. Dazu ist bei dem in Figur 1 gezeigten Ausführungsbeispiel ein Werkzeugträgei-schlitten 22 vorgesehen, welcher die beiden Werkzeugträger 14 und 16 hält. Dieser Werkzeugträgerschlitten 22 wiederum ist an einer Führungseinrichtung 24 beispielsweise in vertikaler Richtung verfahrbar geführt. Es können noch weitere Werkzeugträgerschlitten 22 vorgesehen sein, um auch für eine Beweglichkeit der Werkzeugträger 14, 16 in einer Querrichtung zu sorgen. Die Führungseinrichtung 24 ist fest gegenüber dem Maschinengestell 18 angeordnet.

Die Werkzeugträger 14, 16 weisen einen Bewegungsraum 26 auf, welcher durch die Beweglichkeit des oder der Werkzeugträgerschlitten 22 und gegebenenfalls der Werkzeugträger 14, 16 in Z-Richtung bestimmt ist.

Es ist eine Werkzeuglagereinrichtung 28 vorgesehen, in welcher eine Vielzahl von Werkzeugen gelagert ist; diese Werkzeuge sind in Figur 1 durch das Bezugszeichen 30 angedeutet. Durch die Werkzeugwechselvorrichtung 10 lassen sich Werkzeuge an den Werkzeugträgern 14, 16 wechseln, wobei Werkzeuge zur Ablage der Werkzeuglagereinrichtung 28 zuführbar sind und Werkzeuge zum Wechseln von der Werkzeuglagereinrichtung 28 her zuführbar sind.

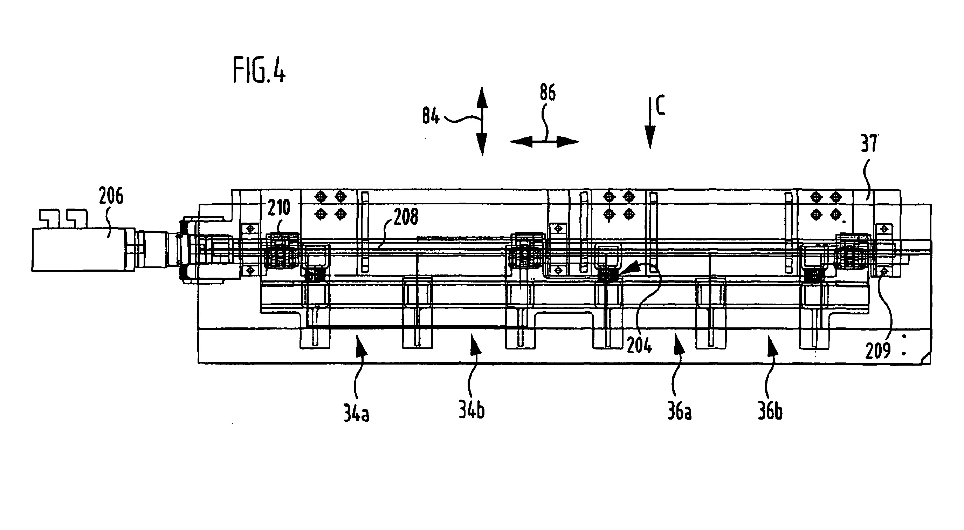

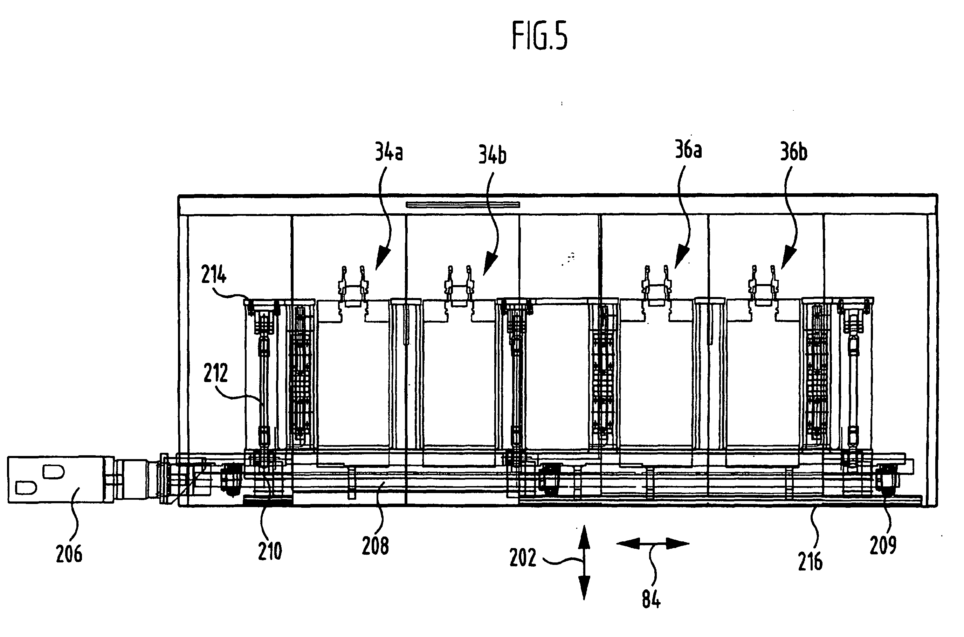

Die Werkzeugwechselvorrichtung 10 weist erfindungsgemäß mindestens eine Durchschleusstation 32 auf, welche fest oder beweglich gegenüber dem Maschinengestell 18 angeordnet sein kann. Bei dem gezeigten Ausführungsbeispiel sind den Werkzeugträgern 14 und 16 jeweils eigene Durchschleusstationen 34a, 34b und 36a, 36b zugeordnet, welche an einem Schlitten 37 (Figuren 4 und 5) sitzen. Der Zweispindler weist damit vier Durchschleusstationen 32 auf.

Für den Werkzeugträger 14 ist die Durchschleusstation 34a eine Holstation, über die sich der Werkzeugträger 14 ein Werkzeug holen kann. Die Durchschleusstation 34b ist als Bringstation ausgebildet, welcher der Werkzeugträger 14 ein Werkzeug bringen kann, um einen Werkzeugwechsel durchzuführen. Die gleichen Verhältnisse gelten für den Werkzeugträger 16 mit seinen zugeordneten Durchschleusstationen 36a und 36b.

Es ist grundsätzlich möglich, daß eine Durchschleusstation 32 sowohl als Holstation als auch als Bringstation ausgebildet ist, über die sich ein Werkzeug dem entsprechenden Werkzeugträger zuführen läßt und über die sich ein ausgewechseltes Werkzeug von dem Werkzeugträger wegführen läßt. Wenn getrennte Durchschleusstationen 34a, 34b bzw. 36a, 36b zum Holen und Bringen vorgesehen sind, dann läßt sich ein Werkzeugwechsel schneller durchführen, da beispielsweise während eines Bringvorgangs ein neues Werkzeug bereits in der Holstation warten kann bzw. dieser zugeliefert werden kann. Werkzeugwechselzeiten lassen sich dadurch verkürzen.

Die Durchschleusstation 34a als Holstation weist eine Einschleusrichtung 38 auf, in der sich ein Werkzeug 40 in die Durchschleusstation 34a einführen läßt. Das Werkzeug 40 wird von der Werkzeuglagereinrichtung 28 her über eine Transporteinrichtung 42, welche beispielsweise einen Kreuzschlitten 44 umfaßt, geliefert. Beim Einschleusen hält diese Transporteinrichtung 42 das Werkzeug 40.

Das Werkzeug 40 verläßt die Durchschleusstation 34a in einer Ausschleusrichtung 46. Diese Ausschleusrichtung 46 fällt vorzugsweise mit der Einschleusrichtung 38 zusammen oder ist parallel zu dieser, so daß sich das Werkzeug 40 in einer Durchschleusrichtung 48 durch die Durchschleusstation 34a schleusen läßt. Wenn das Werkzeug 40 in der Ausschleusrichtung 46 aus der Durchschleusstation 34a herausgeführt wird, dann sitzt es an dem Werkzeugträger 14. In der Durchschleusstation 34a wird das Werkzeug 40 an dem Werkzeugträger 14 fixiert. Dazu ist eine als Ganzes mit 50 bezeichnete Fixierungseinrichtung vorgesehen.

Wie unten noch näher erläutert wird, können die Ausschleusrichtung 46 und die Einschleusrichtung 38 aufgrund einer Querbewegung der Durchschleusstation 34a zwischen der Einschleusstellung und der Ausschleusstellung parallel versetzt sein.

Die benachbarte Durchschleusstation 34b, welche als Bringstation ausgebildet ist, weist eine Einschleusrichtung 52 auf, welche der Einschleusrichtung 38 entgegengerichtet ist. In dieser Richtung 52 läßt sich ein Werkzeug 54, welches an dem Werkzeugträger 14 sitzt, in die Durchschleusstation 34b einführen.

In der Durchschleusstation wird das Werkzeug 54 von dem Werkzeugträger 14 gelöst. Dazu ist eine entsprechende Löseeinrichtung 56 vorgesehen.

Das gelöste Werkzeug 54 läßt sich in einer Ausschleusrichtung 58, welche der Ausschleusrichtung 46 entgegengerichtet ist, aus der Durchschleusstation 34b führen. Die Ausschleusrichtung 58 fällt vorzugsweise mit der Einschleusrichtung 52 zusammen oder ist parallel zu dieser, so daß eine Durchschleusrichtung 60 für das Werkzeug 54 durch die Durchschleusstation 34b vorliegt. Diese Durchschleusrichtung 60 ist der Durchschleusrichtung 48 der Holstation 34a entgegengerichtet.

Wie unten noch näher erläutert wird, können die Ausschleusrichtung 58 und die Einschleusrichtung 52 aufgrund einer Querbewegung des Schlittens 37 zwischen Einschteusstellung und Ausschleusstellung parallel versetzt sein.

Beim Ausschleusen des Werkzeugs 54 In der Ausschteusrichtung 58 ist dieses durch den Kreuzschlitten 44 gehalten. Es wird dann der Werkzeuglagereinrichtung 28 zur Ablage zugeführt.

Die gleichen Verhältnisse gelten sinngemäß für die Durchschleusstationen 36a und 36b, welche dem Werkzeugträger 16 zugeordnet sind.

Bei dem gezeigten Ausführungsbeispiel sind die Durchschleusrichtungen 48 und 60 parallel zur Bewegungsrichtung des Werkzeugträgerschlittens 22 (in Y-Richtung). Werkzeuge lassen sich dadurch durch eine Bewegung der Werkzeugträger 14, 16 über den Werkzeugträgerschlitten 22 abholen bzw. bringen.

Jede Durchschleusstation 32 umfaßt eine Halteeinrichtung 62, um ein Werkzeug 30 bzw. 54 in einem Zwischenplatz 64 bzw. 66 zu halten. In der Durchschleusstation 34a wird durch die zugeordnete Halteeinrichtung 62 das Werkzeug 40 in dem Zwischenplatz 64 gehalten, Um dieses an dem Werkzeugträger 14 fixieren zu können. In dem Zwischenplatz 66 der Durchschleusstation 34b wird das Werkzeug 54 gehalten, um es von dem Werkzeugträger 14 lösen zu können und dann nach dem Lösen zu halten. Das Werkzeug 40 wird bei der Durchschleusstation 34a In der Durchschleusrichtung 48 durch den Zwischenplatz 64 geführt. Das Werkzeug 54 wird bei der Dürchschleusstation 34b in der Durchschleusrichtung 60 durch den Zwischenplatz 66 geführt.

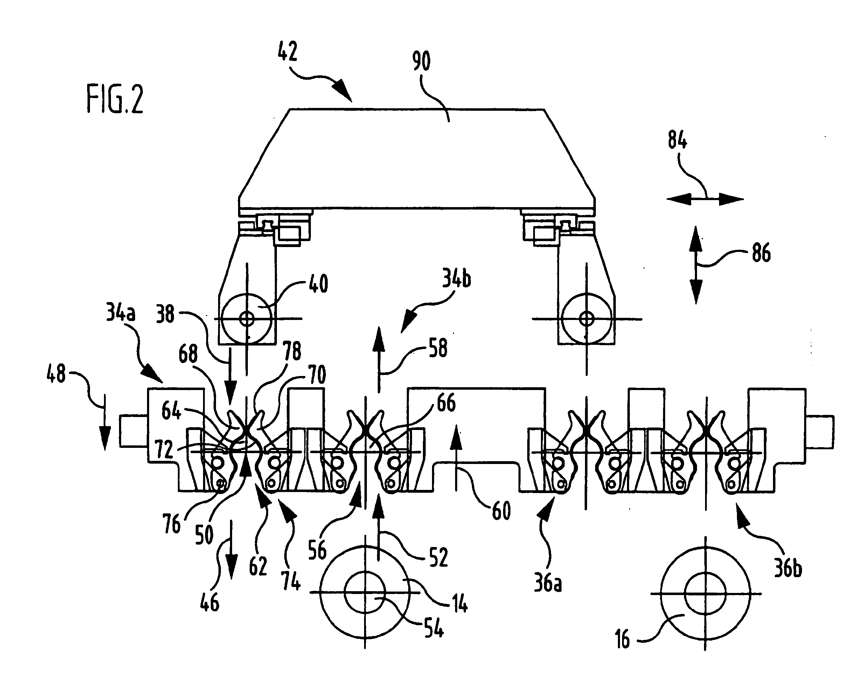

Die Halteeinrichtung 62 umfaßt jeweils gegenüberliegende Greifelemente 68, 70, welche bei dem in Figur 2 gezeigten Ausführungsbeispiel gabelförmig ausgebildet sind. Die Greifelemente 68, 70 sind dabei jeweils drehbar bzw. schwenkbar gelagert. Ihre Drehachsen liegen quer und insbesondere senkrecht zur Durchschteusrichtung 48.

Die Greifelemente 68, 70 weisen dabei Drehrichtungen bzw. Schwenkrichtungen auf, welche entgegengerichtet zueinander sind. Bei einer Bewegung der beiden Greifelemente 68, 70 bewegen sich dann diese entweder aufeinander zu oder voneinander weg.

Durch die Greifelemente 68, 70 läßt sich das Werkzeug 40 an dem Zwischenplatz 64 formschlüssig halten. Die Greifelemente 68, 70 sind dabei in ihrer Gestaltgebung entsprechend an das Werkzeug 40 angepaßt. Sie bilden gemeinsam eine Aufnahme 72, welche zum Halten des Werkzeugs 40 am Zwischenplatz 64 eine Bewegung des Werkzeugs 40 aus dem Zwischenplatz 64 heraus sperrt, d. h. sowohl entgegen der Einschleusrichtung 38 als auch in der Ausschleusrichtung 46 sperrt. Diese Sperrung wird dadurch hervorgerufen, daß das Werkzeug 40 an entsprechende, die Aufnahme 72 begrenzende Wände der Greifelemente 68, 70 anliegt.

Um in dieser Zwischenposition des Werkzeugs 40 am Zwischenplatz 64, in der das Werkzeug 40 an dem Werkzeugträger 14 über die Fixierungseinrichtung 50 fixierbar ist, zu halten, ist eine als Ganzes mit 74 bezeichnete Sperreinrichtung vorgesehen, welche verhindert, daß sich die Greifelemente 68, 70 der Halteeinrichtung 72 aus ihrer Haltelage heraus drehen. Beispielsweise umfaßt die Sperreinrichtung 74 geeignete Anschlagelemente 76 jeweils für das Greifelement 68 und das Greifelement 70, welche eine Drehbewegung der Greif elemente 68, 70 sperren. Das Anschlagelement 76 ist dabei so steuerbar bzw. schaltbar, daß eine Drehbewegung der Greifelemente 68, 70 freigebbar ist, um eben das an dem Werkzeugträger 14 fixierte Werkzeug 40 aus der Durchschleusstation 34a herausführen zu können.

Vorzugsweise ist es vorgesehen, daß über eine Bewegung und insbesondere Linearbewegung des Werkzeugs 40 eine Drehbewegung der Greifelemente 68, 70 initiierbar ist. Entsprechend sind die Greifelemente 68, 70 ausgebildet. Bei dem in Figur 2 gezeigten Ausführungsbeispiel weisen sie jeweils zu der Transporteinrichtung 42 hin, wenn sie einanderzu gedreht sind, bezogen auf die Einschleusrichtung 38 in einem Winkel liegende Oberflächen 78 auf. Wenn über den Kreuzschlitten 44 das Werkzeug 40 in einen Zwischenraum zwischen den gegenüberliegenden Oberflächen 78 der jeweiligen Greifelemente 68, 70 eingefahren wird, dann bewirkt dies (bei gelöster Sperreinrichtung 74) ein Wegdrehen der Greifelemente 68, 70 voneinander. Das Werkzeug 40 kann dadurch in einen muldenförmigen Bereich der beiden Greifelemente 68, 70 eintauchen, welcher dann die Aufnahme 72 bildet. Wenn das Werkzeug 40 in der Aufnahme 72 liegt, dann kann beispielsweise über Federbeaufschlagung dafür gesorgt werden, daß sich die Greifelemente 68, 70 wieder aufeinander zu drehen. Über die Sperreinrichtung 74 wird diese Drehstellung fixiert. Das Werkzeug 40 ist nun in dem Zwischenplatz 64 formschlüssig in der Aufnahme 72 gehalten. Es läßt sich dann an dem Werkzeugträger 14 fixieren, wobei der Werkzeugträger 14 entsprechend an das Werkzeug 40 herangefahren wird, um eben diese Fixierung bewerkstelligen zu können.

Nach der Fixierung des Werkzeugs 40 an dem Werkzeugträger 14 wird die Sperreinrichtung 74 freigegeben. Der Werkzeugträger 14 mit fixiertem Werkzeug 40 kann dann in der Ausschleusrichtung 46 wegfahren.

Die Durchschleusstation 34b funktioniert grundsätzlich auf die gleiche Weise, wobei bei dieser Bringstation an dem Zwischenplatz 66 das Werkzeug 54 von dem Werkzeugträger 14 gelöst wird. Das gelöste Werkzeug 54 läßt sich dann in der Ausschleusrichtung 58 wegfahren.

Der Werkzeugträger 14, welcher dann ohne Werkzeug ist, wird zu der Durchschleusstation 34a gefahren, um dort eben das Werkzeug 40, wie oben beschrieben, aufnehmen zu können.

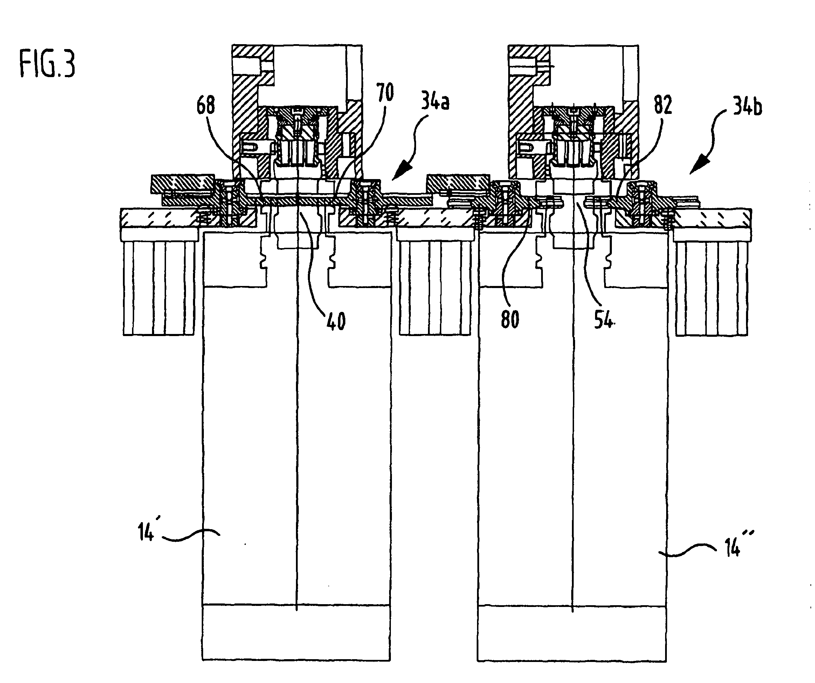

In Figur 3 ist eine Schnittansicht gezeigt, bei welcher die Greifelemente 68, 70 der Durchschleusstation 34a das Werkzeug 40 formschlüssig halten. In dieser Stellung kann das Werkzeug 40 von dem Werkzeugträger 14' gelöst werden.

Daneben ist für die Durchschleusstation 34b eine Situation gezeigt, bei der entsprechende Greifelemente 80, 82 in einer solchen Drehstellung sind, daß das Werkzeug 54 nach oben nach Lösung von dem Werkzeugträger 14" nach oben in der Ausschleusrichtung 58 ausführbar ist. (Da die Durchschleusstationen 34a und 34b bei dem Beispiel einem einzigen Werkzeugträger 14 zugeordnet sind, ist der Werkzeugträger, von welchem das Werkzeug 54 gelöst wurde, mit 14' und 14" bezeichnet; bei den Werkzeugträgern 14' und 14" handelt es sich um den gleichen Werkzeugträger.)

Bei der in Figur 3 gezeigten Situation ist der Werkzeugträger 14" vorbereitet für die Aufnahme eines neuen Werkzeugs (beispielsweise des Werkzeugs 40). An dem Werkzeugträger 14' ist ein Werkzeugwechsel durchgeführt worden. Dieser trägt jetzt das Werkzeug 40.

Die Transporteinrichtung 42 mit ihrem Kreuzschlitten 44 ist außerhalb des Bewegungsraums 26 der Werkzeugträger 14, 16 beweglich, so daß keine Kollisionsgefahr zwischen der Transporteinrichtung 42 und den Werkzeugträgern 14, 16 besteht. Der Kreuzschlitten 44 ist beispielsweise in einer Richtung 84 (parallel zur X-Richtung) quer und insbesondere senkrecht zu den Durchschleusrichtungen 48, 60 linear verschieblich und in einer Richtung 86 (parallel zur Y-Richtung) parallel zu den Durchschleusrichtungen 48, 60 verschieblich (Figuren 2, 4, 5).

Die Transporteinrichtung 42 ist das Bindeglied zwischen den Durchschleusstationen 32 und der Werkzeuglägereinrichtung 28. Der Kreuzschlitten 44 führt Werkzeuge 30 von der Werkzeuglagereinrichtung 28 den Durchschleusstationen 32 zu und führt Werkzeuge von den Durchschleusstationen 32 weg zu der Werkzeuglagereinrichtung 28 zur Ablage. Die Werkzeugwechselvorrichtung 10 ist so bezüglich des Bewegungsraums der Werkzeugträger 14, 16 angeordnet, daß die Werkzeugträger 14, 16 Werkzeuge abgeben können bzw. aufnehmen können. Sie ist vorzugsweise am Rand des Bewegungsraums 26 angeordnet. Der Kreuzschlitten 44 ist außerhalb des Bewegungsraums 26 und beispielsweise oberhalb der Durchschleusstationen 32 geführt. Dies ist in Figur 4 angedeutet. Der Kreuzschlitten umfaßt eine in der Richtung 84 verschiebliche Säule 88, an welcher ein Werkzeug-Bring/Hol-Schlitten 90 in der Richtung 86 geführt ist.

Die Säule 88 und der Werkzeug-Bring/Hol-Schlitten 90 bilden den Kreuzschlitten 44. Die Bewegung des Werkzeug-Bring/Hol-Schlittens 90 in der Richtung 86 ist durch einen an der Säule 88 angeordneten Motor 91 angetrieben. Zur Bewegung der Säule 88 ist ein an dieser angeordneter Motor 92 vorgesehen (Figur 1). Der Motor 92 treibt eine Gewindestange 93 an, welche längs der Säule 88 ausgerichtet ist; es ist ein Ritzel-Zahnstangenantrieb zur Bewegung der Säule 88 vorgesehen. Die Säule 88 ist bei dem gezeigten Beispiel (Figur 1) in vertikaler Richtung (bezogen auf die Schwerkraftrichtung) ausgerichtet. An der Säule 88 läßt sich der Werkzeug-Bring/Hol-Schlitten 90 in der Höhe verschieben und mit der Säule 88 in der Querrichtung 84 verschieben. Über eine Bewegung längs der Säule 88 lassen sich Werkzeuge 30 in bestimmten Höhenstellungen in der Werkzeuglagereinrichtung 28 ablegen.

Ferner ist eine Führung 94 für die Bewegung des Kreuzschlittens 44 längs der Richtung 84 durch Verschiebung der Säule 88 vorgesehen (Figur 1). Diese Führung 94 ist fest bezüglich des Maschinengestells 18 und bezüglich der Durchschleusstationen 32 angeordnet. Die Führungsebene für die Führung 94 liegt dabei quer und insbesondere senkrecht zu den Durchschleusrichtungen 48, 60. Die Bewegung der Säule 88 in der Richtung 84 ist mittels der Gewindestange 93 angetrieben, welche wiederum durch den Motor 92 angetrieben ist. Die Gewindestange 93 ist entsprechend an die Führung 94 angekoppelt und die Führung 94 angepaßt ausgebildet. Über die Bewegung in der Richtung 84 läßt sich der Kreuzschlitten 44 in eine jeweilige definierte Position in X-Richtung bringen, um ein entsprechendes Werkzeug der Durchschleusstation 32 zuzuführen bzw. von dieser abzuführen.

Es kann grundsätzlich vorgesehen sein, daß die Durchschleusstationen 32 fest und insbesondere unbeweglich bezüglich dem Maschinengestell 80 angeordnet sind. Ein Auskoppeln der Werkzeuge in die zugeordneten Werkzeugträger 14, 16 bzw. ein Einkoppeln der Werkzeuge in die Werkzeugträger 14, 16 erfolgt dann, wenn die entsprechenden Werkzeuge in den zugeordneten Durchschleusstationen 32 festgehalten sind, durch eine Bewegung der Werkzeugträger 14, 16 in Z-Richtung; dazu muß eine entsprechende Beweglichkeit der Werkzeugträger 14, 16 in Z-Richtung zugelassen sein. Handelt es sich bei den Werkzeugträgern 14, 16 beispielsweise um Pinolen, dann können sich diese in Z-Richtung bewegen.

Es kann alternativ auch vorgesehen sein, daß die Durchschleusstationen 32, wie in den Figuren 4 und 5 gezeigt, auf einem in einer Richtung 202 parallel zur Z-Richtung beweglichen Schlitten 37 angeordnet sind. Das Entnehmen der Werkzeuge aus den zugeordneten Werkzeugträgern 14, 16 bzw. das Einsetzen erfolgt dann nicht über eine Bewegung der Werkzeugträger 14, 16 selber, sondern über eine Bewegung des Schlittens 37. Ein solcher beweglicher Schlitten 37 ist insbesondere dann vorgesehen, wenn für die Werkzeugträger 14, 16 kein Z-Hub vorgesehen ist.

Der Schlitten 37 ist auf einer Führung 204 geführt, welche eine Beweglichkeit in der Richtung 202 zuläßt. Der Schlitten 37 hält die Durchschleusstationen 32; bei dem gezeigten Ausführungsbeispiel hält er die Durchschleusstationen 34a, 34b und 36a und 36b.

Ein Bewegungsraum des Schlittens 37 liegt vorzugsweise außerhalb des Bewegungsraums der Werkzeugträger 14, 16.

Zur Bewegung des Schlittens 37 ist ein Spindelmotor 206 vorgesehen, welcher eine Welle 208 antreibt. Die Welle 208 ist beispielsweise in der Art einer Kurbelwelle ausgebildet, an welcher Exzenterelemente 210 angeordnet sind, über die eine Rotationsbewegung der Welle 208 in eine Translationsbewegung umsetzbar ist. Die Welle 208 ist über Lager 209 drehbar am Maschinengestell 18 gelagert und translationsfest bezüglich des Maschinengestells 18.

Die Exzenterelemente 210 sind beispielsweise jeweils mit einer Pleuelstange 212 verbunden, wobei die Pleuelstange wiederum über Schwenklager 214 mit dem Schlitten 37 verbunden ist. Durch Drehung der Welle 208 kann dann der Schlitten 37 in Z-Richtung relativ zu einem ortsfesten Balken 216, an welchem die Welle 208 gelagert ist, bewegt werden. Dadurch wiederum kann die Gesamtheit der Durchschleusstationen 32 relativ zu den Werkzeugträgern 14, 16 in Z-Richtung bewegt werden.

Soll beispielsweise ein Werkzeug von dem Werkzeugträger 14 entnommen werden, dann bewegt sich der Schlitten 37 mit der Durchschleusstation 34b auf den Werkzeugträger 14 zu. Wenn das Werkzeug in der Durchschleusstation 34b gegriffen ist, dann bewegt sich der Schlitten 37 von dem Werkzeugträger 14 weg und entkoppelt dabei das entsprechende Werkzeug von dem Werkzeugträger 14. Das Werkzeug kann dann von dem Kreuzschlitten 44 gegriffen werden, um es in der Werkzeuglagereinrichtung 28 abzulegen.

Um ein Werkzeug an dem Werkzeugträger 14 einzusetzen, wird von der Werkzeuglagereinrichtung 28 über den Kreuzschlitten 44 das entsprechende Werkzeug dem Schlitten 37 an die Durchschleusstation 34a geliefert, wobei es durch diese gegriffen wird, wenn der Schlitten 37 von dem Werkzeugträger 14 weg positioniert ist. Der Schlitten 37 fährt dann in der Z-Richtung auf den Werkzeugträger 14 zu, der zuvor in die entsprechende X-Y-Position gebracht wurde. Dadurch wird dann das Werkzeug in den Werkzeugträger 14 eingesetzt.

Die Bewegungsrichtung des Schlittens 37 zum Entnehmen und Einsetzen der Werkzeuge liegt dabei vorzugsweise quer und insbesondere senkrecht zu den Durchschleusrichtungen 48, 60. Wenn ein in der Z-Richtung beweglicher Schlitten 37 für die Durchschleusstation 32 vorgesehen ist, dann sind die Einschleusstellung einer Durchschleusstation und die Ausschleusstellung einer Durchschleusstation in Z-Richtung beabstandet zueinander. Beispielsweise weist die Durchschleusstation 34a als Holstation in der Einschleusstellung einen größeren Abstand zu dem Werkzeugträger 14 auf, wenn ein Werkzeug durch den Kreuzschlitten 44 von der Werkzeuglagereinrichtung 28 her in die Durchschleusstation 34a eingekoppelt wird, als in der Ausschleusstellung. Wenn das Werkzeug aus der Durchschleusstation 34a ausgekoppelt wird, dann liegt die Durchschleusstation 34a näher an dem Werkzeugträger 14.

Entsprechend ist die Durchschleusstation 34b als Bringstation näher am Werkzeugträger 14 liegend, wenn ein Werkzeug gemeinsam mit dem Werkzeugträger 14 eingeschleust wird. In der Ausschleusstellung, bei welcher ein Werkzeug durch den Kreuzschlitten 44 abgenommen wird, um es der Werkzeuglagereinrichtung 28 zuzuführen, ist die Durchschleusstation 34b in Z-Richtung beabstandet zu der Einschleusstellung.

Die Fixierungseinrichtung 50 zur Fixierung eines Werkzeugs an einem Werkzeugträger und die Löseeinrichtung 56 zum Lösen eines Werkzeugs von einem Werkzeugträger umfassen den beweglichen Schlitten 37, um so eben ein Ausfuttern und Einfuttern zu ermöglichen.

Um einen Werkzeugwechsel durchführen zu können, ist die Drehbewegung der Welle 208 gesteuert. Diese Steuerung erfolgt derart, daß der Schlitten 37 entsprechend bereitgestellt ist, wenn ein Werkzeug oder Werkzeuge von der Werkzeuglagereinrichtung 28 geliefert werden bzw. bereitgestellt ist und wenn die Werkzeugträger 14, 16 Werkzeuge an die Werkzeugwechselvorrichtung 10 liefern.

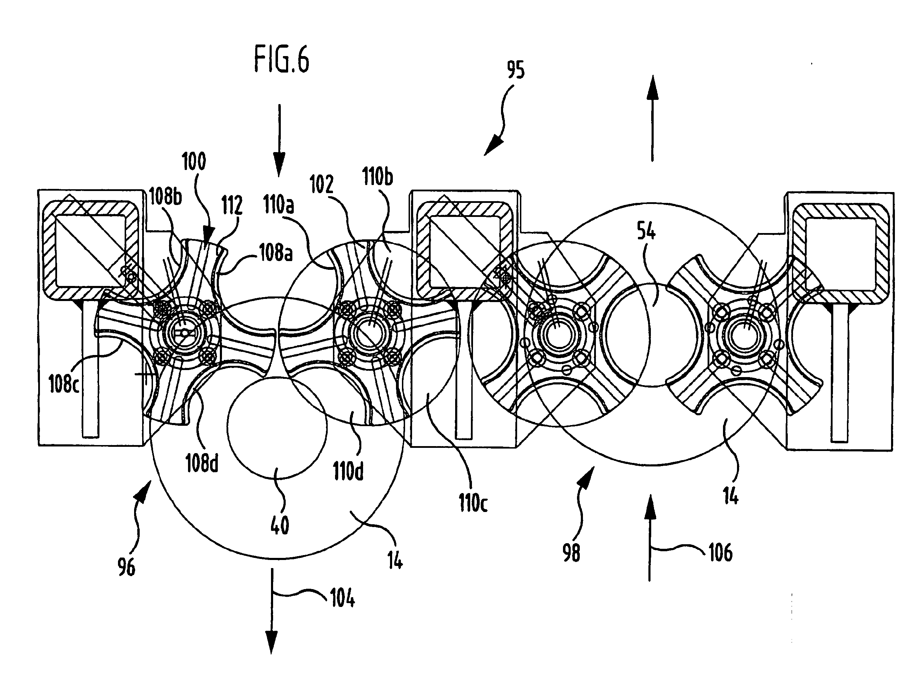

Bei einer weiteren Ausführungsform einer Halteeinrichtung, welche in Figur 6 in einer Teildarstellung schematisch gezeigt und dort als Ganzes mit 94 bezeichnet ist, sind an benachbarten Durchschleusstationen 96, 98 jeweils rotierbare Greifelemente 100, 102 vorgesehen. Die Durchschleusstation 96 ist beispielsweise als Holstation für den Werkzeugträger 14 ausgebildet und die Durchschleusstation 98 ist beispielsweise als Bringstation für diesen Werkzeugträger 14 ausgebildet. (In der Figur 6 werden für die Elemente der Werkzeugmaschine die gleichen Bezugszeichen wie in Figur 1 verwendet.)

Die Durchschleusstation 96 weist eine Durchschleusrichtung 104 auf, welche entgegengesetzt zur Durchschleusrichtung 106 für die Durchschleusstation 98 ist. Beispielsweise sind die Durchschleusrichtungen 104, 106 parallel zur Schwerkraftrichtung ausgerichtet.

Die Greifelemente 100, 102 sind bei diesem Beispiel sternförmig ausgebildet mit einer Mehrzahl von Aufnahmen 108a, 108b, 108c, 108d für das Greifelement 108 und mit einer Mehrzahl von korrespondierenden Aufnahmen 110a, 110b, 110c, 110d für das Greifelement 102. Bei dem gezeigten Ausführungsbeispiel sind vier Aufnahmen vorgesehen. Es können auch mehr oder weniger Aufnahmen vorgesehen sein.

Benachbarte Aufnahmen, wie beispielsweise die Aufnahmen 108a und 108b, sind durch einen Zwischenarm 112 getrennt. Sie sind an ihren jeweiligen Zwischenarmen 112 muldenförmig ausgebildet.

Die Greifelemente 100, 102 sind jeweils drehbar mit einer Drehachse senkrecht zu den Durchschleusrichtungen 104, 106 gelagert. Sie können dabei insbesondere um einen Vollwinkel gedreht werden. Die Drehrichtungen sind jeweils entgegengesetzt, so daß korrespondierende Zwischenarme 112 der beiden Greifelemente 100, 102 sich entweder voneinander weg bewegen oder aufeinanderzu bewegen.

Die korrespondierenden Aufnahmen der beiden Greifelemente 100, 102, beispielsweise die Aufnahmen 108a und 110a, sind so ausgebildet, daß das Werkzeug 40 an einem Zwischenplatz formschlüssig gehalten wird, um das Werkzeug 40 an dem Werkzeugträger 14 fixieren zu können.

Entsprechend sind die Greifelemente für die Durchschleusstation 98 ausgebildet, um das Werkzeug 54 an dem Werkzeugträger 14 gehalten am Zwischenplatz lösen zu können.

Um beim formschlüssigen Halten des Werkzeugs 40 bzw. 54 an einem Zwischenplatz ein Weiterdrehen der zugeordneten Greifelemente 100, 102 zu verhindern, ist wie oben beschrieben eine Sperreinrichtung vorgesehen, welche eben die Drehbewegung der Greifelemente 100, 102 sperrt. Das Werkzeug 40 bzw. 54 ist dann sicher gehalten.

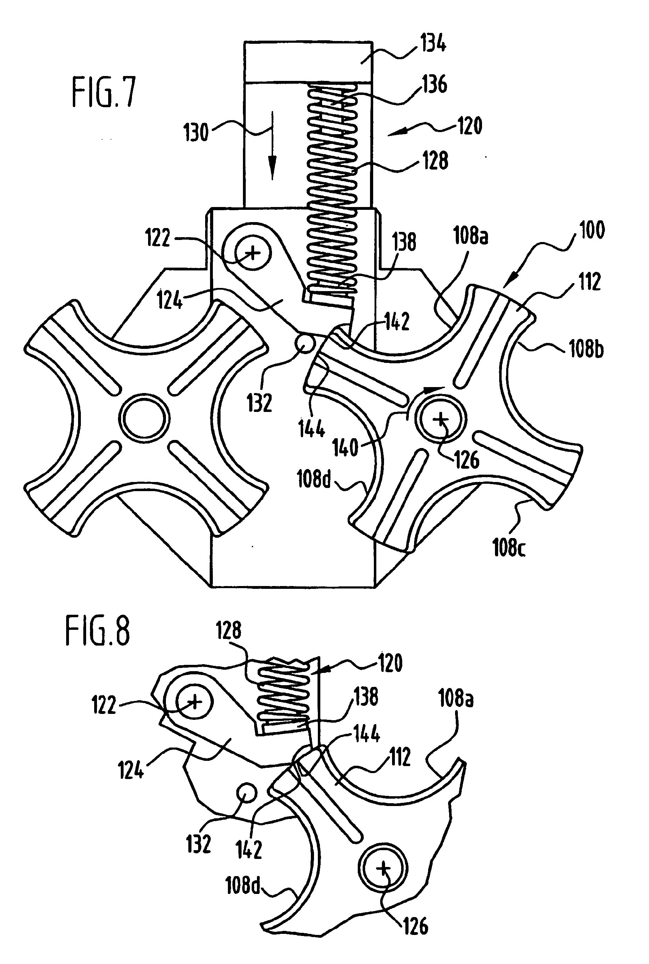

Ein Ausführungsbeispiel einer Sperreinrichtung, welche in Figur 7 und 8 gezeigt und dort als Ganzes mit 120 bezeichnet ist, umfaßt eine um eine Achse 122 drehbar gelagerte Sperrklinke 124. Die Achse 122 liegt parallel zu einer Drehachse 126 des zugeordneten Greifelements (in den Figuren 7 und 8 des Greifelements 100).

Die Sperrklinke ist über eine Druckfeder 128 federbeaufschlagt. Die Federkraft wirkt in einer Richtung 130, welche bei dem gezeigten Ausführungsbeispiel im wesentlichen parallel zur Schwerkraftrichtung ist. Die Druckfeder 128 übt ein Drehmoment auf die Sperrklinke 124 aus, über welches diese gegen ein Anlageelement 132 gedrückt wird. Die Druckfeder 128 ist dazu an einem Abstützelement 134 mit einem Haltezapfen 136 abgestützt und auf einen Haltezapfen 138 der Sperrklinke 124 aufgeschoben.

In Figur 7 ist eine Stellung der Sperrklinke 124 gezeigt, in welcher diese an dem Anlageelement 132 anliegt. In dieser Stellung ist eine Drehung des Greifelements 100 in einer Drehrichtung 140 möglich, und zwar so weit, bis ein Eintauchbereich 142 in eine Sperraufnahme 144 des Greifelements 100 eintaucht (Figur 8). Durch das Drehen des Greifelements 100 in der Drehrichtung 140 wird über das Greifelement 100 die Sperrklinke 124 um die Achse 122 in Gegenrichtung zur Drehrichtung 140 verschwenkt und dabei die Druckfeder 128 zusammengedrückt. Wenn der Eintauchbereich 142 in die Sperraufnahme 144 eintaucht, dann drückt die Druckfeder 128 diesen Eintauchbereich 142 In die zugeordnete Sperraufnahme 144 und sorgt so für eine (kraftschlüssige) Fixierung des Greifelements 100 in einer bestimmten Drehstellung.

Die Sperrung kann aufgehoben werden, indem ein Drehmoment insbesondere über einen Werkzeugträger wie eine Werkzeugspindel auf das Greifelement 100 ausgeübt wird, so daß der Eintauchbereich 142 aus der Sperraufnahme 144 herausgehoben wird. Die Sperrklinke 124 ist an dem Eintauchbereich 142 und in dessen Nähe so ausgebildet, daß ein solches Herausheben aus der Sperraufnahme 144 ermöglicht wird. Die Sperraufnahme 144 ist ebenfalls entsprechend angepaßt ausgebildet.

Wenn dann der entsprechende Zwischenraum 112, an dem die Sperraufnahme 144 ausgebildet ist, über den Bereich der Sperrklinke 124 hinausgedreht ist, dann drückt die Druckfeder 128 die Sperrklinke 124 wiederum auf das Anlageelement 132; es kann dann bei der nächsten Drehstellung zum- Halten eines Werkzeugs eine Sperrung der Weiterdrehung erreicht werden.

Ansonsten funktioniert die Halteeinrichtung 94 wie oben für die Halteeinrichtung 62 beschrieben.

Erfindungsgemäß wird zum Werkzeugwechsel ein Werkzeug durch die jeweilige Durchschleusstation 32 durchgeschleust. Das Werkzeug wird der zugeordneten Durchschleusstation bezogen auf den Bewegungsraum der Werkzeugträger 14, 16 durch diese Werkzeugträger geliefert bzw. von dort abgeholt. Die Durchschleusstationen 32 können dabei unverschieblich bezüglich des Maschinengestells 18 angeordnet, d. h. sie bewegen sich nicht.

Sie können aber auch über einen in Z-Richtung beweglichen Schlitten 37 beweglich sein, wie in den Figuren 4 und 5 gezeigt. Über eine Schlittenbewegung erfolgt dann ein Entnehmen bzw. Einsetzen der Werkzeuge, wenn die Werkzeugträger 14, 16 selber in Z-Richtung keine Hubbewegung durchführen können.

Insbesondere ist keine Bewegung innerhalb des Bewegungsraums 26 vorgesehen.

Von der oder den Durchschleusstationen 32 werden die Werkzeuge von der Transporteinrichtung 42, die insbesondere einen Kreuzschlitten 44 umfaßt, abgeholt und der Werkzeuglagereinrichtung 28 zur Ablage zugeführt bzw. zu einem Werkzeugwechsel vorgesehene Werkzeuge werden von dem Kreuzschlitten 44 von der Werkzeuglagereinrichtung-28 abgeholt und der oder den Durchschleusstationen 32 zugeführt. Die Transporteinrichtung 42 bewegt sich dabei außerhalb des Bewegungsraums 26, so daß eine Kollisionsfreiheit mit den Werkzeugträgern 14, 16 gewährleistet ist.

## Patentansprüche

1. Werkzeugwechselvorrichtung für eine Werkzeugmaschine (12) mit mindestens einem Werkzeugträger (14; 16), umfassend mindestens eine Durchschleusstation (32; 34a, 34b, 36a, 36b; 96, 98), in welche ein Werkzeug (40; 54) in einer Einschleusrichtung (38; 52) einführbar ist und in einer Ausschleusrichtung (46; 58) ausführbar ist, wobei das Werkzeug (40; 54) an der Durchschleusstation (34a, 34b) von dem zugeordneten Werkzeugträger (14) lösbar ist und/oder an dem vorgesehenen Werkzeugträger (14) fixierbar ist und in einem Zwischenplatz (64; 66) gehalten ist, und eine Halteeinrichtung (62; 94) zum Halten des Werkzeugs (40; 54) an einem Zwischenplatz (64; 66),
**dadurch gekennzeichnet , dass** die Halteeinrichtung (62; 94) gegenüberliegende korrespondierende drehbare Greifelemente (68, 70; 100, 102) umfasst, mittels derer ein Werkzeug formschlüssig haltbar ist, und dass über eine Drehbewegung der-Greifelemente (68, 70; 100, 102) ein Werkzeug durch die Durchschleusstation (34a, 34b) durchschleusbar ist, wobei je nach Drehstellung ein Werkzeug einschleusbar, formschlüssig haltbar oder ausschleusbar ist.

2. Werkzeugwechselvorrichtung nach Anspruch 1, **dadurch gekennzeichnet, dass** dem mindestens einen Werkzeugträger (14; 16) mindestens eine Durchschleusstation (34a; 34b) zugeordnet ist.

3. Werkzeugwechselvorrichtung nach Anspruch 1 oder 2, **dadurch gekennzeichnet, dass** jedem Werkzeugträger (14; 16) mindestens eine Durchschleusstation (34a, 34b; 36a, 36b) zugeordnet ist.

4. Werkzeugwechselvorrichtung nach einem der vorangehenden Ansprüche, **dadurch gekennzeichnet, dass** die Einschleusrichtung (52) beim Einführen eines Werkzeugs (54) in die mindestens eine Durchschleusstation (34b) zum Lösen des Werkzeugs (54) von dem zugeordneten Werkzeugträger (14) und die Ausschleusrichtung (46) beim Ausführen eines an einem Werkzeugträger (14) fixierten Werkzeugs (40) aus der Durchschleusstation oder einer weiteren Durchschleusstation (34a) im Wesent**lichen entgegengerichtet sind.**

5. Werkzeugwechselvorrichtung nach einem der vorangehenden Ansprüche, **dadurch gekennzeichnet, dass** die Ausschleusrichtung (58) beim Ausführen eines von einem Werkzeugträger (14) gelösten Werkzeugs (54) aus der mindestens einen Durchschleusstation (34b) und die Einschleusrichtung (38) beim Einführen eines Werkzeugs (40) zum Fixieren an dem vorgesehen Werkzeugträger (14) in die Durchschleusstation oder eine weitere Durchschleusstation (34a) im Wesentlichen entgegengerichtet sind.

6. Werkzeugwechselvorrichtung nach einem der vorangehenden Ansprüche, **dadurch gekennzeichnet, dass** dem mindestens-einen Werkzeugträger (14; 16) eine erste Durchschleusstation (34b; 36b) zum Lösen eines Werkzeugs (54) vom Werkzeugträger (14; 16) und eine zweite Durchschleusstation (34a; 36a) zum Fixieren eines Werkzeugs (40) an dem Werkzeugträger (14; 16) zugeordnet ist.

7. Werkzeugwechselvorrichtung nach einem der vorangehenden Ansprüche, **dadurch gekennzeichnet, dass** die Einschleusrichtung (38; 52) und die Ausschleusrichtung (46; 58) eine Durchschleusrichtung (48; 60) bilden.

8. Werkzeugwechselvorrichtung nach Anspruch 7, **dadurch gekennzeichnet, dass** die Durchschleusrichtung (48; 60) eine vertikale Richtung ist.

9. Werkzeugwechselvorrichtung nach Anspruch 7 oder 8, **dadurch gekennzeichnet, dass** die Durchschleusrichtung (60) zum Lösen eines Werkzeugs (54) und Weitergabe an eine Werkzeuglagereinrichtung (28) und die Durchschleusrichtung (48) zum Einführen eines Werkzeugs (40) von einer Werkzeuglagereinrichtung (28) her und Fixieren des Werkzeugs (40) an dem vorgesehenen Werkzeugträger (14) im Wesentlichen entgegengerichtet sind.

10. Werkzeugwechselvorrichtung nach einem der vorangehenden Ansprüche, **dadurch gekennzeichnet, dass** die mindestens eine Durchschleusstation (32) in einem Bewegungsraum (26) oder am Rande eines Bewegungsraums (26) des mindestens einen Werkzeugträgers (14; 16) angeordnet ist.

11. Werkzeugwechselvorrichtung nach einem der vorangehenden Ansprüche, **dadurch gekennzeichnet, dass** die mindestens eine Durchschleusstation (32) fest gegenüber einem Maschinengestell (18) der Werkzeugmaschine (12) angeordnet ist.

12. Werkzeugwechselvorrichtung nach einem der Ansprüche 1 bis 10, **dadurch gekennzeichnet, dass** die mindestens eine Durchschleusstation (32) beweglich gegenüber einem Maschinengestell (18) der Werkzeugmaschine angeordnet ist.

13. Werkzeugwechselvorrichtung nach Anspruch 12, **dadurch gekennzeichnet, dass** die mindestens eine Durchschleusstation (32) quer zur Einschleusrichtung (38; 52) und Ausschleusrichtung (46; 58) verschieblich ist.

14. Werkzeugwechselvorrichtung nach Anspruch 12 oder 13, **dadurch gekennzeichnet, dass** die mindestens eine Durchschleusstation (32) an einem beweglichen Schlitten (37) angeordnet ist.

15. Werkzeugwechselvorrichtung nach Anspruch 14, **dadurch gekennzeichnet, dass** der Schlitten (37) angetrieben ist.

16. Werkzeugwechselvorrichtung nach einem der Ansprüche 12 bis 15, **dadurch gekennzeichnet, dass** die mindestens eine Durchschleusstation (32) zwischen einer Einschleusstellung und einer Ausschleusstellung beweglich ist.

17. Werkzeugwechselvorrichtung nach Anspruch 16, **dadurch gekennzeichnet, dass** bei der Bewegung zwischen der Einschleusstellung und der Ausschleusstellung ein Werkzeug durch die zugeordnete Durchschleusstation (32) gehalten ist.

18. Werkzeugwechselvorrichtung nach einem der vorangehenden Ansprüche, **dadurch gekennzeichnet, dass** die mindestens eine Durchschleusstation (32) mit einer Werkzeuglagereinrichtung (28) in Verbindung steht, so dass Werkzeuge von der Werkzeuglagereinrichtung (28) der Durchschleusstation (32) zuführbar sind und von der Durchschleusstation (32) Werkzeuge der Werkzeuglagereinrichtung (28) zuführbar sind.

19. Werkzeugwechselvorrichtung nach einem der vorangehenden Ansprüche, **dadurch gekennzeichnet, dass** eine Transporteinrichtung (42) zum Transport von Werkzeugen (30) zwischen der mindestens einen Durchschleusstation (32) und einer Werkzeuglagereinrichtung (28) sich außerhalb eines Bewegungsraums (26) des mindestens einen Werkzeugträgers (16; 18) bewegt.

20. Werkzeugwechselvorrichtung nach Anspruch 19, **dadurch gekennzeichnet, dass** die Transporteinrichtung (42) einen Kreuzschlitten (44) umfasst.

21. Werkzeugwechselvorrichtung nach einem der vorangehenden Ansprüche, **dadurch gekennzeichnet, dass** für die mindestens eine Durchschleusstation (32) eine Löseeinrichtung (56) zum Lösen eines Werkzeugs (54) von einem Werkzeugträger (14) vorgesehen ist.

22. Werkzeugwechselvorrichtung nach einem der vorangehenden Ansprüche, **dadurch gekennzeichnet, dass** für die mindestens eine Durchschleusstation (32) eine Fixierungseinrichtung (50) zum Fixieren eines Werkzeugs (40) an einem Werkzeugträger (14) vorgesehen ist.

23. Werkzeugwechselvorrichtung nach einem der vorangehenden Ansprüche, **dadurch gekennzeichnet, dass** das Werkzeug (40, 54) an dem Zwischenplatz (64; 66) formschlüssig gehalten ist.

24. Werkzeugwechselvorrichtung nach einem der vorangehenden Ansprüche, **dadurch gekennzeichnet, dass** bei einer Bewegung des Werkzeugs (40; 54) in einen Zwischenplatz (64; 66) eine Bewegung des Werkzeugs (40; 54) in Gegenrichtung sperrbar ist.

25. Werkzeugwechselvorrichtung nach einem der vorangehenden Ansprüche, **dadurch gekennzeichnet, dass** als Zwischenplätze mindestens ein getrennter Bringplatz (66) und Holplatz (64) für das Werkzeug (54; 40) vorgesehen sind.

26. Werkzeugwechselvorrichtung nach einem der vorangehenden Ansprüche, **dadurch gekennzeichnet, dass** eine Sperreinrichtung (74; 120) zum Sperren der Drehbewegung vorgesehen ist.

27. Werkzeugwechselvorrichtung nach Anspruch 26, **dadurch gekennzeichnet, dass** die Sperreinrichtung (120) eine federbeaufschlagte Sperrklinke (124) umfasst, welche in eine Sperraufnahme eines Greifelements (100) eintauchbar ist.

28. Werkzeugwechselvorrichtung nach einem der vorangehenden Ansprüche, **dadurch gekennzeichnet, dass** die Greifelemente (68, 70; 100, 102) so ausgebildet sind, dass eine Drehbewegung über eine Bewegung des Werkzeugs (40; 54) initiierbar ist.

29. Werkzeugwechselvorrichtung nach einem der vorangehenden Ansprüche, **dadurch gekennzeichnet, dass** die Formgebung der Greifelemente (68, 70; 100, 102) an ein zu haltendes Werkzeug (40; 54) angepasst ist.

30. Werkzeugwechselvorrichtung nach einem der vorangehenden Ansprüche, **dadurch gekennzeichnet, dass** die Greifelemente (68, 70) in einem Winkelbereich, welcher ein Teilwinkel von 360° ist, drehbar sind.

31. Werkzeugwechselvorrichtung nach einem der Ansprüche 1 bis 29, **dadurch gekennzeichnet, dass** die Greifelemente (100, 102) in einem Vollwinkelbereich drehbar sind.

32. Werkzeugwechselvorrichtung nach einem der vorangehenden Ansprüche, **dadurch gekennzeichnet, dass** die Drehachse quer zu einer Durchschleusrichtung (48; 60) liegt.

33. Werkzeugwechselvorrichtung nach einem der vorangehenden Ansprüche, **dadurch gekennzeichnet, dass** die Greifelemente als Greifgabeln (68, 70) ausgebildet sind.

34. Werkzeugwechselvorrichtung nach einem der vorangehenden Ansprüche, **dadurch gekennzeichnet, dass** die Greifelemente (100, 102) jeweils eine Mehrzahl von Aufnahmen (108a, 108b, 108c, 108d; 110a, 110b, 110c, 110d) für ein Werkzeug aufweisen.

35. Werkzeugwechselvorrichtung nach Anspruch 34, **dadurch gekennzeichnet, dass** benachbarte Aufnahmen (108a, 108b) durch einen Arm (112) getrennt sind.

36. Werkzeugwechselvorrichtung nach Anspruch 34 oder 35, **dadurch gekennzeichnet, dass** die Greifelemente (100, 102) sternförmig ausgebildet sind.

37. Werkzeugwechselvorrichtung nach einem der vorangehenden Ansprüche, **dadurch gekennzeichnet, dass** die Drehrichtung der gegenüberliegenden korrespondierenden Greifelemente (68, 70; 100, 102) entgegengerichtet sind.

38. Werkzeugmaschine mit mindestens einem Werkzeugträger (14; 16), welche mit einer Werkzeugwechselvorrichtung (10) gemäß einem der vorangehenden Ansprüche versehen ist.

39. Werkzeugmaschine nach Anspruch 38, **dadurch gekennzeichnet, dass** eine Werkzeuglagereinrichtung (28) vorgesehen ist.

40. Verfahren zum Werkzeugwechsel an einer Werkzeugmaschine (12) mit mindestens einem Werkzeugträger (14; 16), bei dem gelöste Werkzeuge (40; 54) in einer Werkzeuglagereinrichtung abgelegt werden und zu fixierende Werkzeuge von der Werkzeuglagereinrichtung her geliefert werden, und ein Werkzeug in eine Durchschleusstation (34a, 34b), an welcher das Werkzeug von dem zugeordneten Werkzeugträger gelöst wird oder das Werkzeug an dem vorgesehenen Werkzeugträger fixiert wird, in einer Einschleusrichtung eingeführt wird und in einer Ausschleusrichtung ausgeführt wird,
**dadurch gekennzeichnet , dass** das Werkzeug durch gegenüberliegende korrespondierende drehbare Greifelemente (68, 70; 100, 102) formschlüssig an der Durchschleusstation in einem Zwischenplatz gehalten wird und das Werkzeug durch eine Drehbewegung der Greifelemente durch die Durchschleusstation durchschleusbar ist.

41. Verfahren nach Anspruch 40, **dadurch gekennzeichnet, dass** die Einschleusrichtung und die Ausschleusrichtung fest vorgegeben sind.

42. Verfahren nach Anspruch 40 oder 41, **dadurch gekennzeichnet, dass** die Einschleusrichtung und die Ausschleusrichtung eine Durchschleusrichtung bilden.

## Claims

1. Tool changing device for a machine tool (12) comprising at least one tool carrier (14; 16), comprising at least one transfer station (32; 34a, 34b, 36a, 36b; 96, 98), into which a tool (40; 54) can be introduced in an inward transfer direction (38; 52) and can be extracted in an outward transfer direction (46; 58), wherein, at the transfer station (34a, 34b), the tool (40; 54) can be detached from the associated tool carrier (14) and/or can be fixed to the tool carrier (14) provided and is held in an intermediate location (64; 66), and a holding apparatus (62; 94) for holding the tool (40; 54) at an intermediate location (64; 66), **characterised in that** the holding apparatus (62, 94) comprises opposing corresponding rotatable gripper elements (68, 70; 100, 102), by means of which a tool can be positively held and **in that** a tool can be transferred through the transfer station (34a, 34b) by means of a rotary movement of the gripper elements (68, 70; 100. 102), a tool being inwardly transferable, positively holdable or outwardly transferable, depending on the position of rotation.

2. Tool changing device according to claim 1, **characterised in that** at least one transfer station (34a; 34b) is associated with the at least one tool carrier (14; 16).

3. Tool changing device according to claim 1 or 2, **characterised in that** at least one transfer station (34a, 34b; 36a, 36b) is associated with each tool carrier (14; 16).

4. Tool changing device according to any one of the preceding claims, **characterised in that** the inward transfer direction (52) when introducing a tool (54) into the at least one transfer station (34b) to detach the tool (54) from the associated tool carrier (14) and the outward transfer direction (46) when extracting a tool (40) fixed to a tool carrier (14) from the transfer station or a further transfer station (34a), are substantially oriented in opposite directions.

5. Tool changing device according to any one of the preceding claims, **characterised in that** the outward transfer direction (58) when extracting a tool (54) detached from a tool carrier (14) from the at least one transfer station (34b) and the inward transfer direction (38) when introducing a tool (40), for fixing to the tool carrier (14) provided, into the transfer station or a further transfer station (34a) are substantially oriented in opposite directions.

6. Tool changing device according to any one of the preceding claims, **characterised in that** a first transfer station (34b; 36b) for detaching a tool (54) from the tool carrier (14; 16) and a second transfer station (34a; 36b) for fixing a tool (40) to the tool carrier (14; 16) are associated with the at least one tool carrier (14; 16).

7. Tool changing device according to any one of the preceding claims, **characterised in that** the inward transfer direction (38; 52) and the outward transfer direction (46; 58) constitute one transfer direction (48; 60).

8. Tool changing device according to claim 7, **characterised in that** the transfer direction (48; 60) is a vertical direction.

9. Tool changing device according to claim 7 or 8, **characterised in that** the transfer direction (60) for detaching a tool (54) and passing it to a tool storing apparatus (28) and the transfer direction (48) for introducing a tool (40) from a tool storing apparatus (28) and fixing the tool (40) to the tool carrier (14) provided are substantially oriented in opposite directions.

10. Tool changing device according to any one of the preceding claims, **characterised in that** the at least one transfer station (32) is arranged in a movement space (26) or at the edge of a movement space (26) of the at least one tool carrier (14; 16).

11. Tool changing device according to any one of the preceding claims, **characterised in that** the at least one transfer station (32) is fixedly arranged with respect to a machine frame (18) of the machine tool (12).

12. Tool changing device according to any one of claims 1 to 10, **characterised in that** the at least one transfer station (32) is movably arranged with respect to a machine frame (18) of the machine tool.

13. Tool changing device according to claim 12, **characterised in that** the at least one transfer station (32) is displaceable transversely with respect to the inward transfer direction (38; 52) and outward transfer direction (46; 58).

14. Tool changing device according to claim 12 or 13, **characterised in that** the at least one transfer station (32) is arranged on a movable slide (37).

15. Tool changing device according to claim 14, **characterised in that** the slide (37) is driven.

16. Tool changing device according to any one of claims 12 to 15, **characterised in that** the at least one transfer station (32) is movable between an inward transfer position and an outward transfer position.

17. Tool changing device according to claim 16, **characterised in that** during the movement between the inward transfer position and the outward transfer position, a tool is held by the associated transfer station (32).

18. Tool changing device according to any one of the preceding claims, **characterised in that** the at least one transfer station (32) is connected to a tool storing apparatus (28), so that tools from the tool storing apparatus (28) can be supplied to the transfer station (32) and tools can be supplied from the transfer station (32) to the tool storing apparatus (28).

19. Tool changing device according to any one of the preceding claims, **characterised in that** a transporting apparatus (42) for the transportation of tools (30) between the at least one transfer station (32) and a tool storing apparatus (28) moves outside a movement space (26) of the at least one tool carrier (16; 18).

20. Tool changing device according to claim 19, **characterised in that** the transporting apparatus (42) comprises a cross slide (44).

21. Tool changing device according to any one of the preceding claims, **characterised in that** a detachment apparatus (56) is provided for the at least one transfer station (32) for detaching a tool (54) from a tool carrier (14).

22. Tool changing device according to any one of the preceding claims, **characterised in that** a fixing apparatus (50) is provided for the at least one transfer station (32) for fixing a tool (40) to a tool carrier (14).

23. Tool changing device according to any one of the preceding claims, **characterised in that** the tool (40, 54) is positively held at the intermediate location (64; 66).

24. Tool changing device according to any one of the preceding claims, **characterised in that** upon a movement of the tool (40; 54) into an intermediate location (64; 66) a movement of the tool (40; 54) in the opposite direction can be blocked.

25. Tool changing device according to any one of the preceding claims, **characterised in that** at least one separate delivery location (66) and fetching location (64) for the tool (54; 40) are provided as intermediate locations.

26. Tool changing device according to any one of the preceding claims, **characterised in that** a blocking apparatus (74; 120) for blocking the rotary movement is provided.

27. Tool changing device according to claim 26, **characterised in that** the blocking apparatus (120) comprises a spring-loaded pawl (124), which can enter into a blocking receiver of a gripper element (100).

28. Tool changing device according to any one of the preceding claims, **characterised in that** the gripper elements (68, 70; 100, 102) are configured such that a rotary movement can be initiated by means of a movement of the tool (40; 54).

29. Tool changing device according to any one of the preceding claims, **characterised in that** the shaping of the gripper elements (68, 70; 100, 102) is adapted to a tool (40; 54) to be held.

30. Tool changing device according to any one of the preceding claims, **characterised in that** the gripper elements (68, 70) can be rotated in an angular range, which is a part angle of 360°.

31. Tool changing device according to any one of claims 1 to 29, **characterised in that** the gripper elements (100, 102) can be rotated in a full angle range.

32. Tool changing device according to any one of the preceding claims, **characterised in that** the axis of rotation lies transversely with respect to a transfer direction (48; 60).

33. Tool changing device according to any one of the preceding claims, **characterised in that** the gripper elements are configured as gripper forks (68, 70).

34. Tool changing device according to any one of the preceding claims, **characterised in that** the gripper elements (100, 102) each have a plurality of receivers (108a, 108b, 108c, 108d; 110a, 110b, 110c, 110d) for a tool.

35. Tool changing device according to claim 34, **characterised in that** adjacent receivers (108a, 108b) are separated by an arm (112).

36. Tool changing device according to claim 34 or 35, **characterised in that** the gripper elements (100, 102) are star-shaped.

37. Tool changing device according to any one of the preceding claims, **characterised in that** the directions of rotation of the opposing corresponding gripper elements (68, 70; 100, 102) are opposed.

38. Machine tool comprising at least one tool carrier (14; 16), which is provided with a tool changing device (10) according to any one of the preceding claims.

39. Machine tool according to claim 38, **characterised in that** a tool storing apparatus (28) is provided.

40. Method for changing a tool on a machine tool (12), comprising at least one tool carrier (14, 16), in which detached tools (40; 54) are deposited in a tool storing apparatus and tools to be fixed are supplied from the tool storing apparatus, and a tool is introduced in an inward transfer direction into a transfer station (34a, 34b), at which the tool is detached from the associated tool carrier or the tool is fixed to the tool carrier provided and is extracted in an outward transfer direction, **characterised in that** the tool is positively held at the transfer station in an intermediate location by opposing corresponding rotatable gripper elements (68, 70; 100, 102) and the tool can be transferred through the transfer station by a rotary movement of the gripper elements.

41. Method according to claim 40, **characterised in that** the inward transfer direction and the outward transfer direction are fixedly predetermined.

42. Method according to claim 40 or 41, **characterised in that** the inward transfer direction and the outward transfer direction constitute one transfer direction.

## Revendications

1. Dispositif de changement d'outil pour une machine-outil (12) équipée à'au moins un porte-outil (14 ; 16), comprenant au moins un poste de traversée de sas (32 ; 34a, 34b, 36a, 36b ; 96, 98) dans lequel un outil (40 ; 54) peut être introduit suivant une direction d'entrée de sas (38 ; 52) et pouvant être extrait suivant une direction de sortie de sas (46 ; 58), où l'outil (40 ; 54) est, au niveau du poste de traversée de sas (34a, 34b), détachable du porte-outil associé (14) et / ou peut être fixé sur le porte-outil prévu (14) et est retenu dans un emplacement intermédiaire (64 ; 66), et comprenant un dispositif de retenue (62 ; 94) servant à retenir l'outil (40 ; 54) au niveau d'un emplacement intermédiaire (64 ; 66),
**caractérisé en ce que** le dispositif de retenue (62 ; 94) comprend des éléments de préhension rotatifs (68, 70 ; 100, 102), correspondants et se faisant face, au moyen desquels un outil peut être retenu par sûreté de forme, et **en ce que**, par un mouvement de rotation des éléments de préhension (68, 70 ; 100, 102), un outil peut traverser un sas en passant par le poste de traversée de sas (34a, 34b) où, en fonction de la position de rotation, un outil peut entrer dans le sas, être retenu par sûreté de forme, ou bien peut sortir du sas.

2. Dispositif de changement d'outil selon la revendication 1, **caractérisé en ce qu'**au moins un poste de traversée de sas (34a ; 34b) est associé au porte-outil (14 ; 16) au moins au nombre de un.

3. Dispositif de changement d'outil selon la revendication 1 ou 2, **caractérisé en ce qu'**au moins un poste de traversée de sas (34a, 34b ; 36a, 36b) est associé à chaque porte-outil (14 ; 16).

4. Dispositif de changement d'outil selon l'une quelconque des revendications précédentes, **caractérisé en ce que** la direction d'entrée de sas (52), lors de l'introduction d'un outil (54) dans le poste de traversée de sas (34b) au moins au nombre de un, pour le détachement de l'outil (54) du porte-outil associé (14), et la direction de sortie de sas (46) lors de l'extraction d'un outil (40) fixé sur un porte-outil (14), sortant du poste de traversée de sas ou d'un autre poste de traversée de sas (34a), sont pratiquement de sens opposé.

5. Dispositif de changement d'outil selon l'une quelconque des revendications précédentes, **caractérisé en ce que** la direction de sortie de sas (58), lors de l'extraction d'un outil (54) détaché d'un porte-outil (14), sortant du poste de traversée de sas (34b) au moins au nombre de un, et la direction d'entrée de sas (38), lors de l'introduction d'un outil (40) pour la fixation sur le porte-outil prévu (14), entrant dans le poste de traversée de sas ou dans un autre poste de traversée de sas (34a), sont pratiquement de sens opposé.

6. Dispositif de changement d'outil selon l'une quelconque des revendications précédentes, **caractérisé en ce qu'**un premier poste de traversée de sas (34b ; 36b) servant au détachement d'un outil (54) du porte-outil (14 ; 16) est associé au porte-outil (14 ; 16) au moins au nombre de un, et un deuxième poste de traversée de sas (34a ; 36a) servant à fixer un outil (40), sur le porte-outil (14 ; 16), est associé audit porte-outil au moins au nombre de un.

7. Dispositif de changement d'outil selon l'une quelconque des revendications précédentes, **caractérisé en ce que** la direction d'entrée de sas (38 ; 52) et la direction de sortie de sas (46 ; 58) forment une direction de traversée de sas (48 ; 60).

8. Dispositif de changement d'outil selon la revendication 7, **caractérisé en ce que** la direction de traversée de sas (48 ; 60) est une direction verticale.

9. Dispositif de changement d'outil selon la revendication 7 ou 8, **caractérisé en ce que** la direction de traversée de sas (60) pour le détachement d'un outil (54) et pour le transfert à un dispositif de stockage d'outils (28), et la direction de traversée de sas (48) pour l'introduction d'un outil (40) provenant d'un dispositif de stockage d'outils (28) et pour la fixation de l'outil (40) sur le porte-outil prévu (14), sont pratiquement de sens opposé.

10. Dispositif de changement d'outil selon l'une quelconque des revendications précédentes, **caractérisé en ce que** le poste de traversée de sas (32) au moins au nombre de un est disposé dans un espace de mouvement (26) ou au bord d'un espace de mouvement (26) du porte-outil (14 ; 16) au moins au nombre de un.

11. Dispositif de changement d'outil selon l'une quelconque des revendications précédentes, **caractérisé en ce que** le poste de traversée de sas (32) au moins au nombre de un est disposé en étant fixe par rapport à un bâti de machine (18) de la machine-outil (12).

12. Dispositif de changement d'outil selon l'une quelconque des revendications 1 à 10, **caractérisé en ce que** le poste de traversée de sas (32) au moins au nombre de un est disposé en étant mobile par rapport à un bâti de machine (18) de la machine-outil.

13. Dispositif de changement d'outil selon la revendication 12, **caractérisé en ce que** le poste de traversée de sas (32) au moins au nombre de un est mobile de façon transversale par rapport à la direction d'entrée de sas (38 ; 52) et par rapport à la direction de sortie de sas (46 ; 58) .

14. Dispositif de changement d'outil selon la revendication 12 ou 13, **caractérisé en ce que** le poste de traversée de sas (32) au moins au nombre de un est disposé sur un chariot mobile (37).

15. Dispositif de changement d'outil selon la revendication 14, **caractérisé en ce que** le chariot (37) est entraîné.

16. Dispositif de changement d'outil selon l'une quelconque des revendications 12 à 15, **caractérisé en ce que** le poste de traversée de sas (32) au moins au nombre de un est mobile entre une position d'entrée de sas et une position de sortie de sas.

17. Dispositif de changement d'outil selon la revendication 16, **caractérisé en ce que** lors du mouvement entre la position d'entrée de sas et la position de sortie de sas, un outil est retenu par le poste de traversée de sas associé (32).

18. Dispositif de changement d'outil selon l'une quelconque des revendications précédentes, **caractérisé en ce que** le poste de traversée de sas (32) au moins au nombre de un communique avec un dispositif de stockage d'outils (28), de sorte que des outils provenant du dispositif de stockage d'outils (28) peuvent être fournis au poste de traversée de sas (32), et des outils provenant du poste de traversée de sas (32) peuvent être fournis au dispositif de stockage d'outils (28).

19. Dispositif de changement d'outil selon l'une quelconque des revendications précédentes, **caractérisé en ce qu'**un dispositif de transport (42), servant au transport d'outils (30) entre le poste de traversée de sas (32) au moins au nombre de un, et un dispositif de stockage d'outils (28), se déplace à l'extérieur d'un espace de mouvement (26) du porte-outil (16 ; 18) au moins au nombre de un.

20. Dispositif de changement d'outil selon la revendication 19, **caractérisé en ce que** le dispositif de transport (42) comprend un chariot composé à mouvements croisés (44).

21. Dispositif de changement d'outil selon l'une quelconque des revendications précédentes, **caractérisé en ce qu'**il est prévu, pour le poste de traversée de sas (32) au moins au nombre de un, un dispositif de détachement (56) servant à détacher un outil (54) d'un porte-outil (14).

22. Dispositif de changement d'outil selon l'une quelconque des revendications précédentes, **caractérisé en ce qu'**il est prévu, pour le poste de traversée de sas (32) au moins au nombre de un, un dispositif de fixation (50) servant à fixer un outil (40) sur un porte-outil (14).

23. Dispositif de changement d'outil selon l'une quelconque des revendications précédentes, **caractérisé en ce que** l'outil (40, 54) est retenu, par sûreté de forme, au niveau de l'emplacement intermédiaire (64, 66).

24. Dispositif de changement d'outil selon l'une quelconque des revendications précédentes, **caractérisé en ce que** pendant un mouvement de l'outil (40 ; 54) dans un emplacement intermédiaire (64 ; 66), un mouvement de l'outil (40 ; 54) peut être bloqué en sens inverse.

25. Dispositif de changement d'outil selon l'une quelconque des revendications précédentes, **caractérisé en ce qu'**il est prévu pour l'outil (54; 40), comme emplacements intermédiaires, au moins un emplacement d'amenée (66) et un emplacement de récupération (64) qui sont séparés.

26. Dispositif de changement d'outil selon l'une quelconque des revendications précédentes, **caractérisé en ce qu'**il est prévu un dispositif de blocage (74 ; 120) servant à bloquer le mouvement de rotation.

27. Dispositif de changement d'outil selon la revendication 26, **caractérisé en ce que** le dispositif de blocage (120) comprend un cliquet d'arrêt (124) actionné par un ressort, cliquet d'arrêt qui peut pénétrer dans un logement de blocage d'un élément de préhension (100).

28. Dispositif de changement d'outil selon l'une quelconque des revendications précédentes, **caractérisé en ce que** les éléments de préhension (68, 70 ; 100, 102) sont configurés de manière telle, qu'un mouvement de rotation puisse être initié par un mouvement de l'outil (40 ; 54).

29. Dispositif de changement d'outil selon l'une quelconque des revendications précédentes, **caractérisé en ce que** le façonnage des éléments de préhension (68, 70 ; 100, 102) est adapté à un outil (40 ; 54) à retenir.

30. Dispositif de changement d'outil selon l'une quelconque des revendications précédentes, **caractérisé en ce que** les éléments de préhension (68, 70) sont rotatifs dans une plage angulaire qui correspond à un angle partiel de la plage de 360°.

31. Dispositif de changement d'outil selon l'une quelconque des revendications 1 à 29, **caractérisé en ce que** les éléments de préhension (100, 102) sont rotatifs dans une pleine plage angulaire.

32. Dispositif de changement d'outil selon l'une quelconque des revendications précédentes, **caractérisé en ce que** l'axe de rotation est transversal par rapport à une direction de traversée de sas (48 ; 60).

33. Dispositif de changement d'outil selon l'une quelconque des revendications précédentes, **caractérisé en ce que** les éléments de préhension sont configurés comme des fourches de préhension (68, 70).

34. Dispositif de changement d'outil selon l'une quelconque des revendications précédentes, **caractérisé en ce que** les éléments de préhension (100, 102) présentent à chaque fois, pour un outil, une pluralité de fixations (108a, 108b, 108c, 108d ; 110a, 110b, 110c, 110d).

35. Dispositif de changement d'outil selon la revendication 34, **caractérisé en ce que** les fixations voisines (108a, 108b) sont séparées par un bras (112).

36. Dispositif de changement d'outil selon la revendication 34 ou 35, **caractérisé en ce que** les éléments de préhension (100, 102) sont configurés en forme d'étoile.

37. Dispositif de changement d'outil selon l'une quelconque des revendications précédentes, **caractérisé en ce que** les directions de rotation des éléments de préhension (68, 70 ; 100, 102), correspondants et se faisant face, sont en sens opposé.

38. Machine-outil, équipée d'au moins un porte-outil (14 ; 16), qui est dotée d'un dispositif de changement d'outil (10) conformément à l'une quelconque des revendications précédentes.

39. Machine-outil selon la revendication 38, **caractérisée en ce qu'**il est prévu un dispositif de stockage d'outils (28).

40. Procédé de changement d'outil, sur une machine-outil (12) équipée d'au moins un porte-outil (14 ; 16), procédé dans lequel des outils détachés (40 ; 54) sont déposés dans un dispositif de stockage d'outils et des outils à fixer sont fournis en provenance du dispositif de stockage d'outils, et un outil dans un poste de traversée de sas (34a, 34b), sur lequel l'outil est détaché du porte-outil associé, ou bien l'outil est fixé sur le porte-outil prévu, est introduit dans une direction d'entrée de sas et est extrait dans une direction de sortie de sas,
**caractérisé en ce que** l'outil est retenu, par sûreté de forme, dans un emplacement intermédiaire au niveau du poste de traversée de sas, par des éléments de préhension rotatifs (68, 70 ; 100, 102) correspondants et se faisant face, et l'outil, sous l'effet d'un mouvement de rotation des éléments de préhension, peut traverser un sas en passant par le poste de traversée de sas.

41. Procédé selon la revendication 40, **caractérisé en ce que** la direction d'entrée de sas et la direction de sortie de sas sont prédéfinies de manière fixe.

42. Procédé selon la revendication 40 ou 41, **caractérisé en ce que** la direction d'entrée de sas et la direction de sortie de sas forment une direction de traversée de sas.
